# EUROPÄISCHE PATENTSCHRIFT

(11) **EP 3 989 529 B1**
(45) Veröffentlichungstag und Bekanntmachung des Hinweises auf die Patenterteilung: **16.10.2024**
(21) Anmeldenummer: 21214355.6
(22) Anmeldetag: 22.08.2018
(51) Int. Cl.: H04M 11/02, H04M 9/00, H04M 9/02

(54) **SPRECHSTELLE FÜR EIN INTERCOM-NETZWERK**
STATION FOR AN INTERCOM NETWORK
POSTE TÉLÉPHONIQUE POUR UN RÉSEAU D'INTERCOMMUNICATION

(30) Priorität: 29.11.2017 DE 102017128217; 16.03.2018 DE 102018106257
(43) Veröffentlichungstag der Anmeldung: 27.04.2022
(62) Teilanmeldung aus: 18190138.0
(73) Patentinhaber: RIEDEL Communications International GmbH, 42109 Wuppertal (DE)
(72) Erfinder: Schaaf, Stephan, 54570 Oberstadtfeld (DE); Hanisch, Bernhard, 42855 Remscheid (DE); Dodson, Jake, 42117 Wuppertal (DE); Riedel, Thomas, 42109 Wuppertal (DE)
(74) Vertreter: Roche, von Westernhagen & Ehresmann

(56) Entgegenhaltungen:
- WO-A2-2007/009744
- DE-A1- 102012 216 548
- US-A1- 2016 334 830
- TELEX COMMUNICATIONS ET AL: "KP-12 12-Position Keypanel", 1 April 2006 (2006-04-01), pages 1 - 2, XP055795696, Retrieved from the Internet <URL:https://o7apw1mnva631ijznbm4u9ze-wpengine.netdna-ssl.com/wp-content/uploads/2016/05/4434_Manufacturer-Data-Sheet-RTS-KP-12L.pdf> [retrieved on 20210415]

## Beschreibung

Die Erfindung betrifft zunächst eine Sprechstelle für ein Intercom-Netzwerk nach Anspruch 1.

Die Anmelderin ist seit über drei Jahrzehnten mit der Entwicklung und Fertigung von Sprechstellen für Intercom-Netzwerke befasst.

Bezüglich der Funktion einer Sprechstelle im Sinne der Erfindung wird auf die nachfolgend aufgeführten Patentanmeldungen der Anmelderin verwiesen, deren Inhalt hiermit in den Inhalt der vorliegenden Patentanmeldung, auch zum Zwecke der Bezugnahme auf einzelne Merkmale und auch zum Zwecke der Aufnahme einzelner Merkmale in die Ansprüche dieser Patentanmeldung, zur Vermeidung von Wiederholungen aufgenommen wird: DE 10 2014 011 963 A1, und die nachveröffentlichten Patentanmeldungen DE 10 2017 107 148 A1, DE 10 2017 107 150 A1, DE 10 2017 106 946 A1, DE 10 2017 116 002 A1, DE 10 2017 116 273 A1.

Bei Sprechstellen des Standes der Technik ist an der Gehäusefront eine Vielzahl von Bedienelementen angeordnet. Bei Bestätigung eines Bedienelementes kann hierdurch eine unmittelbare Hör- und/oder Sprechverbindung zu einer ausgewählten anderen Sprechstelle hergestellt werden. Die Sprechstellen sind sämtlich über eine Vermittlungsstelle miteinander verbunden, wobei die Vermittlungsstelle das Intercom-Netzwerk administriert und verwaltet und die Leitungswege schaltet.

Durch Auswahl eines bestimmten Bedienelementes und dessen Betätigung wählt die Bedienperson dieser Sprechstelle eine bestimmte andere Sprechstelle aus.

Es ist bei Sprechstellen des Standes der Technik bereits bekannt, Hebel vorzusehen, die je nach Art der Ausbildung als Zweistellungshebel oder Dreistellungshebel bezeichnet werden. Der Hebel kann, ausgehend von einer Mittelposition, in die hinein der Hebel federvorgespannt ist, in eine erste Richtung oder in eine zweite Richtung verlagert werden. Bei einer Verlagerung in eine erste Richtung, z. B. nach oben, gelangt der Hebel in eine erste Arbeitsposition oder Schaltposition und bei Verlagerung in eine zweite Richtung, z. B. nach unten, die zu der ersten Richtung entgegengesetzt orientiert ist, kann der Hebel in eine zweite Arbeitsposition oder zweite Schaltposition hinein verlagert werden.

Die Bedienperson muss den Hebel in der Regel solange gedrückt halten, wie eine Hörverbindung oder Sprechverbindung oder eine Hör- und Sprechverbindung bereitgestellt werden soll.

Die zwei Schaltpositionen stellen unterschiedliche Funktionen bereit. So kann die erste Schaltposition eine Sprechverbindung gewährleisten und die andere Schaltposition eine Hörverbindung gewährleisten. Sobald die Bedienperson keine Kraft mehr auf das Hebelelement ausübt, wird dieser von der Federvorspannung in die Mittelposition hin zurückverlagert, und die Hörverbindung oder die Sprechverbindung oder die Hör- und Sprechverbindung wird unterbrochen und beendet.

Derartige Sprechstellen werden beispielsweise bei Veranstaltungen oder Live-Veranstaltungen eingesetzt. Es können dabei zahlreiche, beispielsweise 20 oder 50 unterschiedliche Sprechstellen vorgesehen sein, die alle miteinander über die Vermittlungsstelle miteinander kommunizieren können. Die Geräuschkulissen der einzelnen Sprechstellen sind insbesondere bei Live-Veranstaltungen oder Sportveranstaltungen extrem unterschiedlich. Auch weisen die Bediener einer Sprechstelle unterschiedliche Vorlieben auf. Schließlich können Sprechstellen auch über unterschiedliche Mikrofoneinstellungen verfügen.

Damit eine Bedienperson einer Sprechstelle für die unterschiedlichen Hörverbindungen bzw. Sprechverbindungen mit anderen Sprechstellen jeweils individuelle Lautstärkeeinstellungen wählen kann, sind die Bedienelemente programmierbar. So kann z. B. unter Zuhilfenahme eines Lautstärkereglers die Lautstärke jeden einzelnen Bedienelementes variiert und eingestellt werden. Allerdings ist die Einstellung recht mühselig und unkomfortabel sowie störanfällig.

Aus Telex Communications ET A:, "KP-12 12-Position Keypanel" 1. April 2006, Seiten 1-2, XP055795696 geht eine Sprechstelle hervor, bei der 12 Kippschalter angeordnet sind. Rechts neben dem Kippschalter sind zwei Drehelemente angeordnet. DE 10 2012 216548 A1 bezieht sich auf ein Bedienelement mit magnetischer Haptikerzeugung.

Der Erfindung liegt die Aufgabe zugrunde, die eingangs beschriebene Sprechstelle des Standes der Technik derartig weiterzuentwickeln, dass sie einen verbesserten Bedienkomfort bietet.

Die Erfindung löst diese Aufgabe mit den Merkmalen des Anspruches 1, mit denen des Kennzeichenteils, und ist demgemäß dadurch gekennzeichnet, dass der Hebel mit einem Magneten kooperiert, der auf den in einer Position nahe der Mittelposition befindlichen Hebel hohe, den Hebel in seine Mittelposition hinein beaufschlagende Kräfte ausübt, wobei wenigstens ein von dem Magneten gesondertes Federelement den Hebel zusätzlich in die Mittelposition hinein beaufschlagt.

Das Prinzip der Erfindung besteht im Wesentlichen darin, dass der Hebel von wenigstens zwei unterschiedlichen Elementen in die Mittelposition hinein vorgespannt wird. Zum einen können ein oder mehrere Federelemente, insbesondere herkömmliche Federelemente, wie mechanische Federn, darunter Wendelfedern, Blattfedern, Spiralfedern, Zugfedern, Druckfedern, Federn aus metallischem oder gummielastischem Material oder dergleichen vorgesehen sein, deren Federrückstellkraft mit zunehmender Auslenkung des Hebels zunimmt, wobei die Federkraft insbesondere einer Federkonstante unterliegt. Ein solches Federelement kann z. B. an einen Werkstoffbereich des Hebels, z. B. an einem Anlenkpunkt am Hebel angreifen. Mit zunehmender Auslenkung des Hebels, ausgehend von seiner Mittelposition, in eine der beiden Schaltpositionen oder Arbeitspositionen steigt die Federkraft an, insbesondere linear oder im Wesentlichen linear an. Gemäß der Erfindung sind diese Federelemente verhältnismäßig schwach ausgelegt oder klein dimensioniert. Diese Federelemente können also nur geringe Rückstellkräfte auf den aus der Mittelposition ausgelenkten Hebel ausüben und diesen auf diese Weise in seine Mittelposition hinein beaufschlagen.

Gemäß der Erfindung ist zusätzlich ein Magnet angeordnet. Dieser Magnet übt zusätzliche Vorspannkräfte auf den außerhalb der Mittelposition befindlichen Hebel aus, die ihn in die Mittelposition hinein beaufschlagen. Der Magnet ist gemäß der ersten Ausführungsform ortsfest angeordnet, so dass er mit dem in einer Mittelposition befindlichen Hebel maximal kooperiert. Ein Magnet kann beispielsweise an dem Hebel angeordnet sein, und ein Gegenmagnet kann ortsfest relativ zu einem Gehäuse der Sprechstelle oder fest relativ zu einem Gehäuse der Sprechstelle angeordnet sein. Alternativ können auch ein Magnet fest relativ zur Sprechstelle und der Gegenmagnet fest relativ zu dem verlagerbaren, nämlich schwenkbaren Hebel angeordnet sein. Auch kann der Hebel oder ein Abschnitt des Hebels aus einem magnetischen oder magnetisierbaren Material gebildet sein oder ein solches umfassen, wobei jeweils Magnet und Gegenmagnet miteinander wechselwirken. Eines der beiden Elemente, Magnet oder Gegenmagnet, ist jedenfalls fest relativ zu einem Gehäuse der Sprechstelle angeordnet und das jeweils andere Element ist fest relativ zu dem Hebel angeordnet und mit dem Hebel bewegbar.

Magnet und Gegenmagnet kooperieren derart miteinander, dass die magnetischen Kräfte den Hebel in seine Mittelposition hinein beaufschlagen.

Entscheidend ist, dass die von Magnet und Gegenmagnet generierten Kräfte nur in einem Nahfeld wirken, d. h. nur in tatsächlichen Positionen des Hebels, die nahe der Mittelposition angeordnet sind.

Wird der Hebel, ausgehend von einer Mittelposition, von einer Bedienperson betätigt, müssen, ausgehend von der Mittelposition, sowohl die durch den Magneten ausgeübten Kräfte als auch die von dem Federelement ausgeübten Kräfte überwunden werden. Sobald der Hebel, ausgehend von der Mittelposition, im Zuge der weiteren Verlagerung in eine Schaltposition oder Arbeitsposition einen gewissen Schwenkwinkel überschritten hat, sind Magnet und Gegenmagnet derartig weit relativ voneinander entfernt worden, dass das Nahfeld überschritten worden ist, und die Magnetkräfte nicht mehr wirken. Nun muss die Bedienperson entlang einer weiteren Verlagerung des Bedienelementes in die Schaltposition oder Arbeitsposition nur noch die Kraft des Federelementes überwinden. Diese Kraft ist allerdings relativ gering. Dies bedeutet, dass der Benutzer, der den Hebel in einer der beiden Arbeitspositionen oder Schaltpositionen gedrückt halten möchte, während des Gedrückthaltens nur die geringen, von dem Federelement ausgeübten Rückstellkräfte überwinden muss, um den Hebel in der Arbeits- oder Schaltposition verharren zu lassen.

Bei einer Rückbewegung hingegen wird dem Benutzer das Erreichen der Mittelposition taktil besonders gut erkennbar signalisiert. Wenn der Hebel nämlich entlang seiner Bewegungsbahn von einer Schaltposition hin zurück in die Mittelposition um einen bestimmten Schwenkwinkel verlagert worden ist, und zwar aufgrund einer Rückstellbewegung des Hebels, die von dem ersten Federelement generiert ist, kann die Bedienperson - unter der Annahme, dass sie ihren Finger nach wie vor auf der entsprechenden Oberfläche des Betätigungsendes des Hebels aufgelegt hat - spüren, dass die Kraft des Magneten wieder wirksam wird, und der Hebel hierdurch einer zusätzlichen zweiten und damit insgesamt stärkeren, den Hebel beaufschlagenden Federkraft ausgesetzt wird.

Dabei kann eine Art magnetische Verrastung erreicht werden, da die Verlagerungsbewegung des Hebels gegen Ende der Verlagerungsbewegung aus der Arbeitsposition hin in die Mittelposition beschleunigt wird oder schneller wird bzw. unter Ausübung einer stärken Rückholkraft oder Vorspannkraft erfolgt. Dies wird dem Benutzer taktil angezeigt.

Dies erhöht den Bedienungskomfort der Sprechstelle für den Benutzer.

Gemäß einer vorteilhaften Ausgestaltung wird die Sprechstelle der gattungsgemäßen Art derartig weiterentwickelt, dass unter Beibehaltung einer komfortablen Auswahlmöglichkeit von Sprechstellen, zu denen eine Audio-Verbindung aufgebaut werden soll, und unter Beibehaltung einer herkömmlichen komfortablen Bedienweise, eine verbesserte Einstellung einer individuellen Lautstärke oder eines anderen Parameters, der in Bezug zu dem Bedienelement steht, erreicht werden kann.

Die Ausführungsform ist demgemäß dadurch gekennzeichnet, dass der Hebel ein drehbar gelagertes Stellelement zur Änderung eines Parameters aufweist, oder dass der Hebel ein solches Stellelement übergreift.

Gemäß einer ersten Variante dieser Ausführungsform weist der Hebel ein drehbar gelagertes Stellelement auf. Dieses dient der Änderung, und damit auch der Einstellung eines Parameters. Der Parameter kann beispielsweise die Lautstärke sein, die dem Bedienelement zugeordnet ist. Das drehbar gelagerte Stellelement kann beispielsweise ein Einstellrad, einen Drehhebel, einen Drehknopf oder ähnliches umfassen. Das Stellelement ist unmittelbar an dem Hebel angeordnet. Es kann also vorteilhaft mit dem Hebel mit-verlagert werden. Es kann im Bereich des freien Endes des Hebel angeordnet sein oder alternativ im Bereich des angelenkten Endes des Hebels. Das Stellelement kann auch im Bereich eines Mittelabschnittes des Hebels angeordnet sein.

Durch Drehung des Hebels um einen bestimmten Drehwinkel in einem ersten Drehsinn oder in dem gegenläufigen, zweiten Drehsinn oder durch Drehung des Stellelementes um eine Umdrehung oder um mehrere Umdrehungen kann der Parameter, beispielsweise die Lautstärke, eingestellt werden. Die Einstellung oder Änderung kann unmittelbar auch eine Speicherung des eingestellten Parameterwertes veranlassen.

Eine nachfolgende Betätigung des Stellelementes kann den Parameter reduzieren oder erhöhen. Nach erfolgter weiterer Betätigung kann der geänderte Parameterwert unmittelbar gespeichert werden.

Gemäß der ersten Variante der Ausführungsform ist das Stellelement zur Änderung des Parameters, insbesondere der Lautstärke, unmittelbar an dem Hebel angeordnet. Damit ist eine unmittelbare Zuordnung des Stellelementes zu dem Hebel getroffen, die beim Stand der Technik nicht gegeben war. Darüber hinaus ist durch die vorgenommene Anordnung des Stellelementes unmittelbar an den Hebel, eine besonders gute und komfortable Bedienbarkeit des Stellelementes erreicht.

Vorzugsweise dient das Stellelement zur Änderung der Lautstärke. Es kann z. B. unmittelbar die Lautstärke des Mikrofons oder die Lautstärke des Lautsprechers eingestellt oder geändert werden, der fest an der Sprechstelle angeordnet ist. Es kann - als Änderung des Parameters - aber auch eine Änderung eines Lautstärkesignals erfolgen, das an einem Mikrofonanschluss oder einem Lautsprecheranschluss anliegt oder einem solchen Anschluss zugewiesen wird.

Gemäß einer zweiten Variante der Ausführungsform übergreift der Hebel das drehbar gelagerte Stellelement. Bei dieser Variante ist das Stellelement beispielsweise drehbar an einer Frontseite des Gehäuses der Sprechstelle oder jedenfalls drehbar relativ zu der Frontseite der Sprechstelle gelagert, und mithin nicht gemeinsam mit dem Hebel verlagerbar. Der Hebel übergreift das Stellelement und kann hierfür beispielsweise eine Ausnehmung aufweisen. Das ortsfest - aber drehbar angeordnete - Stellelement taucht infolge einer Relativbewegung des Hebels durch die Ausnehmung hindurch.

Gleichermaßen wird erreicht, dass das Stellelement unmittelbar dem Hebel zugeordnet ist. Auch mit dieser Variante kann eine besonders gute und komfortable Bedienung des Stellelementes erzielt werden.

Bei der zweiten Variante der Ausführungsform, wonach der Hebel das Stellelement übergreift, kann eine Verlagerung des Hebels über das ortsfest festgehaltene Stellelement hinweg erfolgen.

Sowohl in der Mittelposition als auch in den beiden Schaltpositionen des Hebels ist das Drehelement jeweils für die Bedienperson leicht zugänglich und kann gedreht und damit betätigt werden. Zugleich ist aber eine unmittelbare räumlich nahe Zuordnung getroffen, so dass die Bedienperson komfortabel und bequem sowohl eine Verlagerung des Hebels als auch eine Betätigung des Stellelementes vornehmen kann.

Während gemäß der ersten Variante der Ausführungsform das Stellelement einer Verlagerungsbewegung des Hebels folgt, ist bei der zweiten Variante der Ausführungsform das Stellelement relativ zu der Sprechstelle ortsfest angeordnet, und folgt einer Verlagerungsbewegung des Hebels nicht.

Eine weitere Ausführungsform der Erfindung sieht vor, die Sprechstelle der gattungsgemäßen Art derartig weiterzuentwickeln, so dass unter Beibehaltung der komfortablen Auswahlmöglichkeiten von Sprechstellen, zu denen eine Audio-Verbindung aufgebaut werden soll, und unter Beibehaltung einer herkömmlichen komfortablen Bedienweise, eine verbesserte Einstellung einer individuellen Lautstärke oder eines anderen Parameters erreicht werden kann.

Die Ausführungsform ist demgemäß dadurch gekennzeichnet, dass die Auswahltaste ein drehbar gelagertes Stellelement umfasst oder übergreift.

Bezüglich des Verständnisses der Lehre dieser Ausführungsform wird zur Vermeidung von Wiederholungen auf die obigen Ausführungen verwiesen.

Gemäß einer weiteren vorteilhaften Ausgestaltung der Erfindung ist die Auswahltaste nach Art eines Hebels ausgebildet. Hierdurch kann eine besonders komfortable Bedienung erreicht werden.

Gemäß einer weiteren Ausgestaltung der Erfindung ist der Hebel entlang einer gradlinigen Bewegungsbahn verlagerbar. Insbesondere bei Betrachtung der Sprechstelle von vorne, also bei Ansicht einer Gehäusefront der Sprechstelle, kann der Hebel vertikal nach oben bzw. vertikal nach unten, jeweils ausgehend von einer Mittellage, in eine der beiden Arbeitspositionen oder Schaltpositionen verlagert werden. Hierdurch kann eine intuitive komfortable Bedienung erreicht werden.

Gemäß einer weiteren Ausgestaltung der Erfindung ist an einer Gehäusefront der Sprechstelle wenigstens ein Anschluss für ein Headset angeordnet. Der Anschluss kann insbesondere als Male-XLR-Buchse oder als ein anderer Anschluss für ein Headset ausgebildet sein. Einer Betätigung des Stellelementes folgt ein Vorgang der elektronischen Weiterverarbeitung innerhalb der Sprechstelle, z. B. durch eine Steuerung, insbesondere durch einen Prozessor, der dafür sorgt, dass ein Lautstärkesignal für einen Lautsprecher oder ein Mikrofon mit einer entsprechenden Pegel- oder Signalhöhe generiert wird.

Gemäß einer weiteren vorteilhaften Ausgestaltung der Erfindung ist die Drehachse des Stellelementes quer oder im Wesentlichen quer zu der ersten Richtung orientiert. Auch hierdurch wird eine intuitive leicht zugängliche und komfortable aber auch sichere und störunanfällige Bedienung des Stellelementes möglich.

Angemerkt sei, dass gemäß der Ausführungsform der Erfindung eine Bewegung der Auswahltaste bzw. des Hebels aus der Mittelposition in eine Schaltposition mit einer Bewegung des Stellelementes einhergeht. Das Stellelement ist also mit dem Hebel bzw. mit der Auswahltaste bewegungsgekoppelt oder bewegungseinheitlich verbunden. Hierdurch kann eine besonders sichere und störunanfällige Bedienung erreicht werden. Der Benutzer der Sprechstelle kann ohne weiteres intuitiv und sicher eine Betätigung des Hebels - ausgehend von seiner Mittelposition - in eine erste Schaltposition oder Arbeitsposition von einer Drehbewegung des Stellelementes unterscheiden, ohne dass sich diese beiden unterschiedlichen Betätigungen in irgendeiner Form gegenseitig beeinträchtigen oder überlagern.

Gemäß einer weiteren vorteilhaften Ausgestaltung der Erfindung ist der Hebel langgestreckt ausgebildet. Weiter vorteilhaft ist vorgesehen, dass die Drehachse des Stellelementes entlang einer Richtung der Längserstreckung des Hebels verläuft. Die Drehachse des Stellelementes wird also bei einer Bewegung des Hebels entlang der ersten Richtung und entgegen der ersten Richtung mitbewegt. Durch die hier beschriebene Orientierung der Drehachse wird eine besonders gute Funktionstrennung der beiden Betätigungsmöglichkeiten erreicht.

Gemäß einer weiteren vorteilhaften Ausgestaltung der Erfindung erfolgen infolge einer Drehung des Stellelementes eine Einstellung eines Parameters und/oder eine Änderung eines Parameters. Eine Drehung des Stellelementes kann auf einfache, herkömmliche Weise von einer Elektronik oder einem anderen geeigneten elektronischen Bauteil detektiert, registriert und erfasst sowie verarbeitet werden. Hierdurch können z. B. elektronische Werte für den Parameter in ein Register eingeschrieben oder überschrieben werden. Diese Registerwerte können auch gespeichert werden bzw. von einem Mikroprozessor in der Sprechstelle weiterverarbeitet werden. Hierdurch kann unmittelbar oder mittelbar eine Einstellung oder eine Änderung eines Parameters, z. B. des Lautstärkewertes für ein Mikrofon oder für einen Lautsprecher, vorgenommen werden.

Ein zu ändernder Parameter kann im Sinne der Erfindung neben der Lautstärke oder einem der Lautstärke entsprechendem Signal auch beispielsweise ein Wert für eine Beleuchtung oder eine Anzeige der Sprechstelle sein, z. B. ein Wert für eine Beleuchtungsstärke. Auch kann eine Beleuchtung oder Anzeige einem Hebel oder einer Auswahltaste der Sprechstelle unmittelbar oder mittelbar räumlich zugeordnet werden.

Auch die Beleuchtungsstärke eines diesen Hebels oder dieser Auswahltaste zugeordneten Displays oder dessen Farbe oder Farbanzeige kann durch eine Drehung des Stellelementes als Parameter geändert oder eingestellt werden.

Gemäß einer weiteren vorteilhaften Ausgestaltung der Erfindung dient die Zahl der Umdrehungen des Stellelementes oder die Größe des Drehwinkels, um den das Stellelement gedreht worden ist, oder die Häufigkeit, mit der das Stellelement betätigt worden ist, als Maß für eine Änderung eines Parameters. Insbesondere kann der Drehwinkel oder die Zahl der Umdrehungen proportional einem Wert für die Änderung des Parameters entsprechen. Hierdurch kann eine besonders einfache Datenverarbeitung erreicht werden.

Gemäß einer weiteren vorteilhaften Ausgestaltung der Erfindung weist die Sprechstelle einen Speicher auf, der den eingestellten oder geänderten Parameterwert speichert. Der Speicher kann flüchtig oder nicht flüchtig ausgebildet sein. So ist an der Sprechstelle des Weiteren ein Mikroprozessor oder eine Recheneinheit oder eine Steuerung vorgesehen, die auf den Speicher zugreift und diesen auslesen kann. Der in den Speicher eingeschriebene Parameterwert kann von dieser Steuerung der Sprechstelle oder von einer anderen Recheneinheit verwendet werden. Hierdurch kann die Lautstärke eines Lautsprechers oder eines Mikrofons als Einstellung gespeichert, geändert oder verwendet werden.

Gemäß einer weiteren vorteilhaften Ausgestaltung der Erfindung entspricht der Parameter einem Wert für die Lautstärke des Lautsprechers oder umfasst einen solchen Wert. Alternativ umfasst der Parameter einen Signalwert für ein an dem Lautsprecheranschluss anliegendes Lautstärkesignal oder für ein an einem Mikrofonanschluss anliegendes Mikrofonsignal.

Damit kann eine Einstellung der Lautstärke des Lautsprechers oder eine Einstellung der Lautstärke des Mikrofons vorgenommen werden.

Gemäß einer weiteren vorteilhaften Ausgestaltung der Erfindung ist das Stellelement nach Art eines endlos drehbaren Rades ausgebildet. Hierdurch wird eine besonders komfortable Bedienung möglich.

Alternativ kann das Stellelement auch nach Art eines drehbaren Rades ausgebildet sein, welches in einem Drehsinn oder in beide Drehsinne einen Endanschlag aufweist.

Gemäß einer weiteren vorteilhaften Ausgestaltung der Erfindung ist vorgesehen, dass eine Betätigung des Stellelementes in einem ersten Drehsinn eine Erhöhung des Wertes des Parameters und eine Betätigung des Stellelementes in einem zweiten, gegenüber dem ersten Drehsinn gegenläufigen Drehsinn eine Reduzierung des Wertes des Parameters bewirkt.

Gemäß einer weiteren vorteilhaften Ausgestaltung der Erfindung ist der Hebel als Drei-Stellungs-Hebel ausgebildet. Dies bedeutet, dass der Hebel neben einer Mittelposition oder Mittellage auch zwei ausgelenkte Positionen oder Schaltpositionen oder Arbeitspositionen einnehmen kann.

Gemäß einer weiteren vorteilhaften Ausgestaltung der Erfindung ist das Stellelement am freien Ende des Hebels oder nahe des freien Endes des Hebels angeordnet. Hierdurch kann eine besonders gute Erreichbarkeit des Stellelementes bei einer komfortablen Betätigung des Stellelementes erzielt werden.

Gemäß einer weiteren vorteilhaften Ausgestaltung der Erfindung kann das Stellelement von Werkstoffbereichen des Hebels teilweise eingefasst sein. Insbesondere kann vorgesehen sein, dass das Stellelement von Werkstoffbereichen des Hebels, die teilweise eine Mantelfläche des Stellelementes übergreifen, teilweise eingefasst ist. Hierdurch können Fehlbedienungen des Stellelementes verhindert oder reduziert werden.

Gemäß einer alternativen Ausgestaltung der Erfindung ist das Stellelement nahe eines angelenkten Endes des Hebels angeordnet. Hierdurch kann mit unterschiedlichen Bereichen von Fingern des Benutzers oder mit unterschiedlichen Fingerpositionen entweder das Stellelement betätigt werden oder der Hebel aus der Mittelposition in eine Schaltposition verlagert werden.

Gemäß einer weiteren vorteilhaften Ausgestaltung der Erfindung weist das Stellelement auf seiner Mantelfläche Rippen oder Vorsprünge auf. Hierdurch kann eine besonders gute Haptik gewährleistet werden.

Weitere Vorteile der Erfindung ergeben sich aus den nicht zitierten Unteransprüchen sowie anhand der nachfolgenden, in den Figuren dargestellten Ausführungsbeispiele. In den Zeichnungen zeigen:
- Fig. 1: in einer teilgeschnittenen, schematischen Ansicht ein Ausführungsbeispiel einer erfindungsgemäßen Sprechstelle in Vorderansicht,
- Fig. 1a: in einer vergrößerten Einzeldarstellung, etwa gemäß Teilkreis la in Fig. 1, ein Bedienelement in einer schematischen, teilgeschnittenen und vergrößerten Darstellung,
- Fig. 2: in einer schematische Rückansicht die Hinterseite oder Gehäuserückseite der Sprechstelle der Fig. 1,
- Fig. 3: in einer schematischen, blockschaltbildartigen Ansicht ein Ausführungsbeispiel eines Intercom-Netzwerkes unter Verwendung erfindungsgemäßer Sprechstellen,
- Fig. 4: in einer perspektivischen, schematischen, vereinfachten Ansicht ein weiteres Ausführungsbeispiel einer erfindungsgemäßen Sprechstelle in einer Ausschnittsdarstellung, wobei hier zwei Bedienelemente in unterschiedlichen Positionen dargestellt sind, die nahe ihres angelenkten Endes ein Stellelement in Form eines Stellrades aufweisen,
- Fig. 5: ein weiteres Ausführungsbeispiel der erfindungsgemäßen Sprechstelle in einer Darstellung gemäß Fig. 4, mit zwei demgegenüber unterschiedlich ausgebildeten Hebeln,
- Fig. 6: ein weiteres Ausführungsbeispiel in einer Darstellung gemäß Fig. 4, wobei hier an den freien Enden der Betätigungshebel Stellelemente angeordnet sind,
- Fig. 7: ein weiteres Ausführungsbeispiel in einer Darstellung gemäß Fig. 4, wobei die Bedienelemente anders ausgestaltet sind, und die Stellelemente frei zugänglich sind,
- Fig. 8: ein weiteres Ausführungsbeispiel ähnlich der Fig. 7 in einer Darstellung gemäß Fig. 4, wobei die Stellelemente teilweise eingefasst sind,
- Fig. 9: ein weiteres Ausführungsbeispiel in einer Darstellung gemäß Fig. 4, wobei hier das als Hebel ausgebildete Betätigungselement als Ganzes um eine Drehachse schwenkbar oder kippbar ist,
- Fig. 10: ein weiteres Ausführungsbeispiel der erfindungsgemäßen Sprechstelle in einer teilgeschnitten, schematischen Ansicht, wobei hier das Bedienelement in Einzeldarstellung in drei unterschiedlichen Positionen dargestellt ist, und wobei ein Sensor, zwei Schalter und eine Steuerung in blockschaltbildartiger Darstellung angedeutet sind, in einer Darststellung etwa entsprechend einem Längsschnitt durch einen in Fig. 4 dargestellten Hebel, etwa entlang der Schnittebene X-X in Fig. 4,
- Fig. 11: in einer Darstellung gemäß Fig. 10 ein weiteres Ausführungsbeispiel einer erfindungsgemäßen Sprechstelle, wobei hier das Bedienelement in Einzeldarstellung in drei unterschiedlichen Positionen dargestellt ist, und wobei hier schematisch ein Magnet, ein Gegenmagnet und ein erstes und ein zweites Federelement dargestellt sind,
- Fig. 12: ein weiteres Ausführungsbeispiel eines Betätigungselements unter Darstellung zahlreicher Einzelteile in einer Explosionsansicht,
- Fig. 13: in Vorderansicht eine Platine oder Leiterplatte, an der mehrere Bedienelemente der Fig. 12 im montierten Zustand befestigbar sind,
- Fig. 14: die Leiterplatte der Fig. 13 in einer Rückansicht gemäß Ansichtspfeil XIV,
- Fig. 15: das Bedienelement der Fig. 12 im zusammengesetzten und montierten Zustand,
- Fig. 16: das Ausführungsbeispiel der Fig. 15 in einer schematischen Seitenansicht etwa entlang Ansichtspfeil XVI in Fig. 15,
- Fig. 17: das Bedienelement der Fig. 16 in einer Darstellung gemäß Fig. 16, wobei sich das Hebelelement in einer Mittenstellung oder Mittelposition befindet,
- Fig. 18: das Bedienelement der Figuren 16 und 17 in einer geänderten Schaltposition,
- Fig. 19: in perspektivischer Rückansicht ein gemeinsam mit dem Betätigungshebel verschwenkbares Leiterplattenelement, die sogenannte Encoder-Einheit, in Einzeldarstellung etwa entlang Ansichtspfeil XIX in Fig. 15,
- Fig. 20: ein weiteres Ausführungsbeispiel eines erfindungsgemäßen Bedienelementes in einer perspektivischen Explosionsansicht in einer Darstellung gemäß Fig. 12,
- Fig. 20a: ein Hebelelement des Bedienelementes der Fig. 20 in Einzeldarstellung in einer Rückansicht etwa entlang Ansichtspfeil XXa in Fig. 20,
- Fig. 21: in Vorderansicht ein Ausführungsbeispiel einer Leiterplatte, an der mehrere Bedienelemente gemäß Fig. 20 festlegbar sind,
- Fig. 22: in perspektivischer Einzelansicht das Bedienelement der Fig. 20 in zusammengebautem Zustand,
- Fig. 22a: das Bedienelement der Fig. 22 in einer Rückansicht etwa gemäß Ansichtspfeil XXIIa in Fig. 22,
- Fig. 23: das Bedienelement der Fig. 22 in Seitenansicht etwa entlang Ansichtspfeil XXIII in Fig. 22,
- Fig. 24: das Bedienelement der Fig. 23 mit einem im Mittelstellung befindlichen Hebelelement, und
- Fig. 25: das Bedienelement der Figuren 23 und 24 in einer weiteren Hebelstellung.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

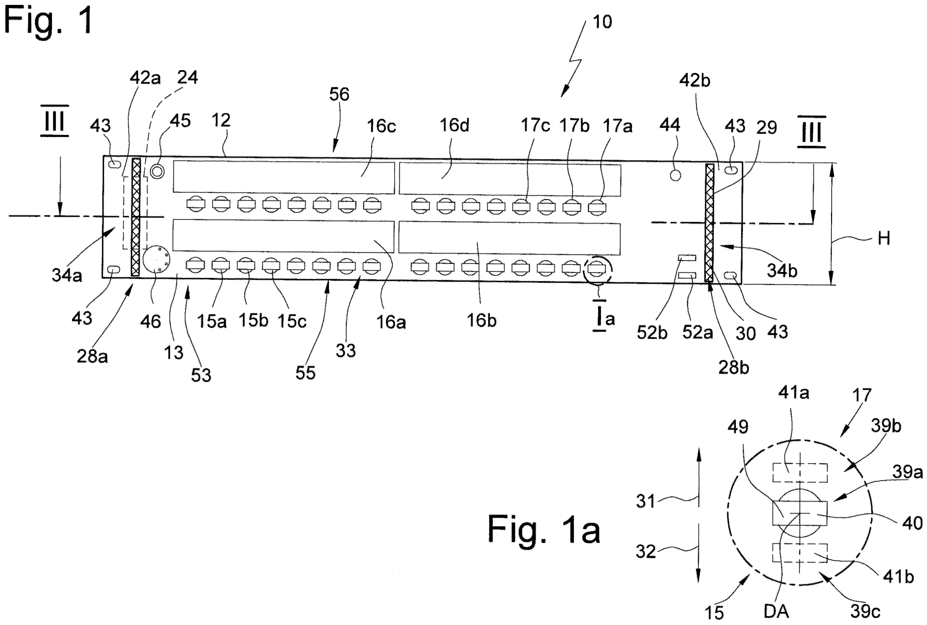

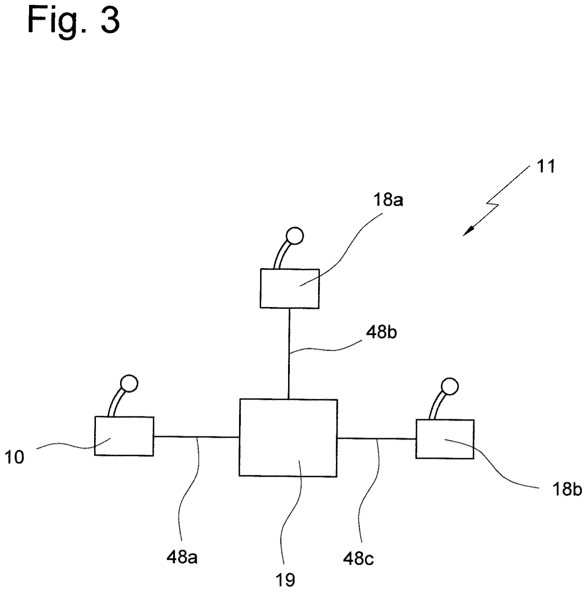

Ausweislich Fig. 1 ist ein Ausführungsbeispiel einer erfindungsgemäßen Sprechstelle in seiner Gesamtheit mit dem Bezugszeichen 10 bezeichnet. Die Sprechstelle 10 dient zur Verwendung in einem Intercom-Netzwerk, das in Fig. 3 beispielhaft dargestellt ist und in seiner Gesamtheit mit 11 bezeichnet ist. Die erfindungsgemäße Sprechstelle 10 ist über eine Verbindungsleitung 48a mit einer Vermittlungsstelle 19 verbunden. An die Vermittlungsstelle 19 sind über Verbindungsleitungen 48b, 48c andere weitere Sprechstellen 18a, 18b angeschlossen. Mit dem Intercom-Netzwerk 11 können beispielsweise Live-Veranstaltungen, wie Sportereignisse oder Musikveranstaltungen, begleitet werden. An jeder Sprechstelle 10, 18a, 18b kann beispielsweise ein Kommentator, Moderator, Beobachter oder eine andere Bedienperson sitzen und mit jeweils einen anderen Person an einer anderen Sprechstelle kommunizieren. Das Intercom-Netzwerk 11 ist insoweit eine komplexe Gegensprech- oder Wechselsprechanlage.

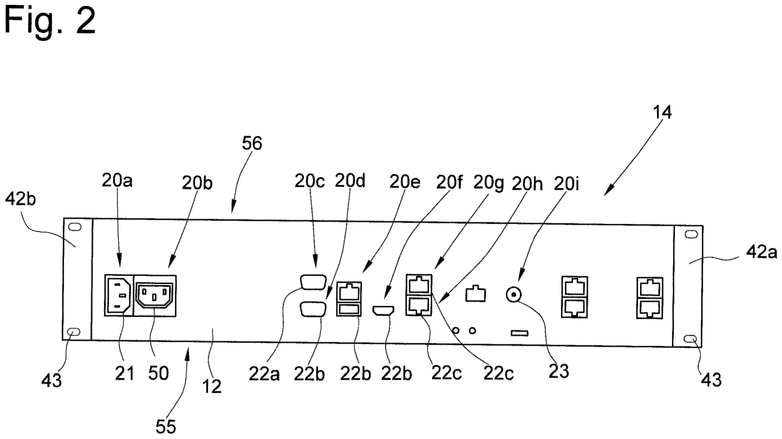

Die erfindungsgemäße Sprechstelle 10 umfasst ein in den Figuren nur lediglich schematisch angedeutetes, beispielsweise quaderförmig ausgebildetes Gehäuse 12 mit einer Gehäusefront 13, die in Fig. 1 zu sehen ist, einer Gehäuserückseite 14, die in Fig. 2 zu sehen ist, und einer Deckenwand 56 sowie eine Bodenwand 55.

An der Frontseite 13 oder Gehäusefront 13 der Sprechstelle 10 ist eine Vielzahl von Bedienelementen 15a, 15b, 15c, 15d angeordnet, sowie eine Vielzahl von Displays 16a, 16b, 16c, 16d. Die Bedienelemente 15a, 15b, 15c, 15d sind als Auswahltasten 17a, 17b, 17c, 17d ausgebildet. Die Bedienelemente 15a, 15b, 15c, 15d sind programmierbar, so dass z. B. jedem Bedienelement 15a, 15b, 15c, 15d eine bestimmte andere Sprechstelle des Intercom-Netzwerkes 11 zugewiesen werden kann. Die Vermittlungsstelle 19 verwaltet und administriert diese direkten Punkt-zu-Punkt-Verbindungen.

Durch Betätigung einer bestimmten Auswahltaste, z. B. der Auswahltaste 17b in Fig. 1, kann der Benutzer dieser Sprechstelle 10 gemäß Fig. 1 eine unmittelbare Audioverbindung, z. B. eine HörVerbindung oder eine Sprech-Verbindung, oder eine Hör-Sprech-Verbindung, mit einer Bedienperson einer anderen Sprechstelle 18a, 18b des Intercom-Netzwerkes 11 bereitstellen. Die Bedienperson muss also nichts anderes machen, als die Auswahltaste 17 zu betätigen.

Wie dies exakt abläuft, wird weiter unten beschrieben.

An der Gehäusefront 13 sind ausweislich Fig. 1 Öffnungen 28a, 28b angeordnet, die dem Austritt von Schallwellen von einem in Fig. 1 lediglich angedeuteten Lautsprecher 24 dienen. Die Öffnungen 28a, 28b sind nach Art eines Schlitzes 30a, 30b ausgebildet, könnten aber auch anders ausgestaltet sein.

An der Gehäusefront 13 sind darüber hinaus eine Reihe von Anschlüssen, wie beispielsweise USB-Anschlüsse 52a, 52b, ein Mikrofonanschluss 45, ein Headsetanschluss 46 und lediglich angedeutet auch ein Mikrofon 44 angeordnet.

Die Gehäusefront 13 ist im Wesentlichen rechteckförmig ausgebildet und weist eine rechteckige Grundfläche 33 auf. An den Seitenrändern 34a, 34b der Grundfläche 33 sind Befestigungsabschnitte 42a, 42b angeordnet, die Öffnungen 43 aufweisen, unter deren Zuhilfenahme eine Festlegung der Sprechstelle 10 z. B. an einem Montagerahmen oder Rack vorgenommen werden kann.

Auf der Rückseite 14 des Gehäuses 12 der Sprechstelle 10 ist ausweislich Fig. 2 eine Vielzahl von Anschlüssen 20a, 20b, 20c, 20d, 20e, 20f, 20g, 20h angeordnet, die beispielsweise einen Spannungsversorgunganschluss 21, Datenkabel Anschlüsse 22a, 22b, 22c, einen BNC-Anschluss 23 oder einen Netzweiterschleifungsanschluss 50 aufweisen können.

Ausweislich Fig. 1a ist eine Auswahltaste 17 bzw. ein entsprechendes Bedienelement 15 von einem Hebel 49 oder einem Betätigungshebel 49 ausgebildet. Dieser kann ausgehend von einer Mittelposition 39a, 40 durch eine Verlagerung entlang einer ersten Richtung 31, die auch als Vertikalrichtung bezeichnet wird, in eine andere Position 39b verlagert werden, die auch als erste Arbeitsposition oder erste Schaltposition bezeichnet wird. Wird der Betätigungshebel 49 alternativ, ausgehend von der Mittelposition 40, entgegen der Vertikalrichtung 31, also in Gegenrichtung 32 verlagert, erreicht er, ausgehend von seiner Mittelposition 40, eine zweite Position 39c, die als zweite Arbeitsposition 41b oder zweite Schaltposition bezeichnet wird.

Bei der Sprechstelle 10 gemäß der Erfindung besteht die Besonderheit, dass der Hebel 49 einer ersten Schaltposition 39b eine erste Funktion der Sprechstelle 10 gewährleistet und in einer zweiten Schaltposition 39c eine andere, zweite Funktion der Sprechstelle 10 gewährleistet. Insbesondere ist das Bedienelement 15 bzw. eine Auswahltaste 17 derartig programmierbar, dass in einer ersten Arbeitsposition 41a ein Talk-Modus oder Sprechmodus und in der zweiten Arbeitsposition 41b ein Hörmodus oder Listen-Modus erreicht wird.

Dabei ist die Anordnung so getroffen, dass das Betätigungselement, wenn es sich nicht in der ersten Arbeitsposition 41a oder in der zweiten Arbeitsposition 41b befindet, in eine Mittelposition 40 hinein vorgespannt ist. Der Benutzer muss also, solange er die entsprechende Funktion der Sprechstelle 10 ausüben oder aufrechterhalten möchte, also solange er im Sprechmodus oder im Hörmodus verbleiben möchte, die Taste auch betätigt halten, also gedrückt oder gezogen halten.

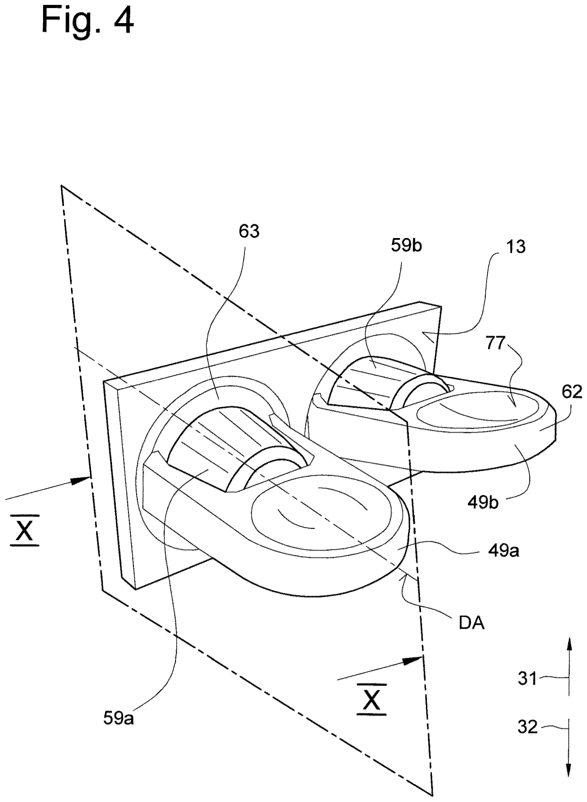

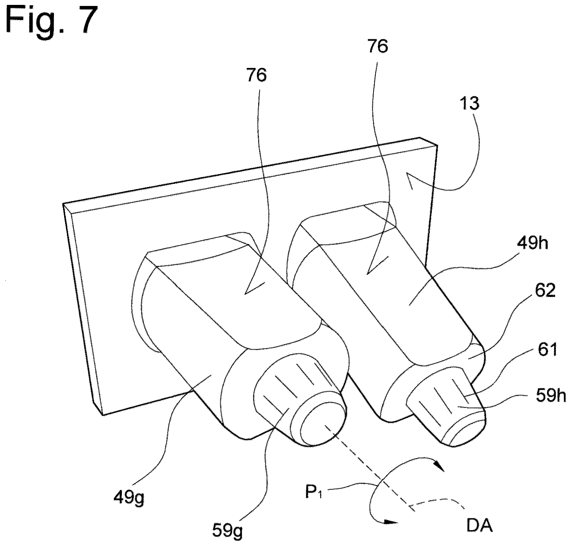

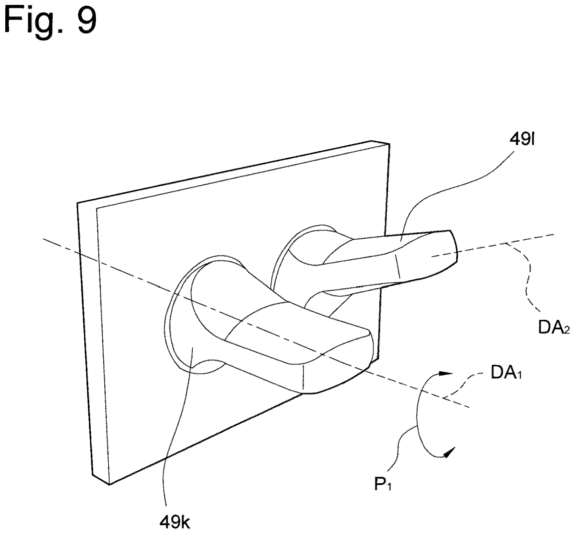

Um nun, entsprechend der gewünschten, durch die Schalterstellung des Betätigungshebels 49 erreichte Funktion einen Parameter einstellen zu können, z. B. die Lautstärke im Hörmodus oder die Lautstärke im Listenmodus, oder um alternativ die für dieses entsprechende Bedienelement insgesamt maßgebliche Lautstärke einstellen zu können, ist ausweislich der Ausführungsbeispiele der Fig. 4 bis 10 unmittelbar an dem Betätigungselement ein Stellelement 59 angeordnet. Dieses ist bei den Ausführungsbeispielen der Fig. 4 bis 8 und 10 drehbar gelagert. Bei dem Ausführungsbeispiel der Fig. 9 ist der Hebel an sich drehbar bzw. um eine Schwenkachse kippbar gelagert.

Bei sämtlichen Ausführungsbeispielen 4 bis 8 und 10 ist das Stellelement 59 von einem endlos umdrehbaren Rad gebildet: Um die unterschiedlichen Stellelemente 59 der unterschiedlichen Ausführungsbeispiele voneinander differenzieren zu können, sind diese als Stellelemente 59a bis 59j bezeichnet. Dabei sind die Fig. 4 bis 9 so getroffen, dass darin jeweils zwei Betätigungshebel 49 als Betätigungshebelpaar dargestellt sind, und identisch ausgebildet sind, sich aber in unterschiedlichen Positionen oder Stellungen befinden.

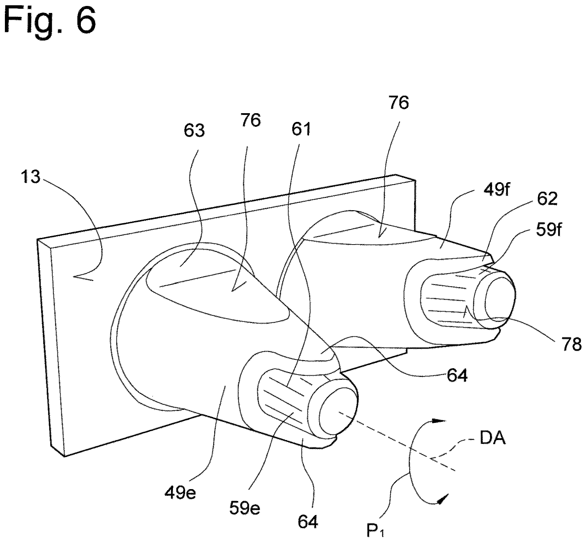

Wie sich dem Betrachter der Fig. 6 bis 8 unmittelbar erschließt, sind die Stellelemente 59e, 59f, 59g, 59h, 59i, 59j der Betätigungshebel 49e, 49f, 49g, 49h, 49i, 49j, jeweils an einem freien Ende 62 des jeweiligen Betätigungshebels 49e, 49f, 49g, 49h, 49i, 49j angeordnet. Hierdurch wird eine unmittelbare gute Zugänglichkeit der jeweiligen Stellelemente 59e, 59f, 59g, 59h, 59i, 59j erreicht. Zugleich weisen die Betätigungshebel 49e, 49f, 49g, 49h, 49i, 49j jeweils eine Betätigungsfläche 76 auf, die näher an der Gehäusefront 13 angeordnet als das jeweilige Stellelemente 59e, 59f, 59g, 59h, 59i, 59j.

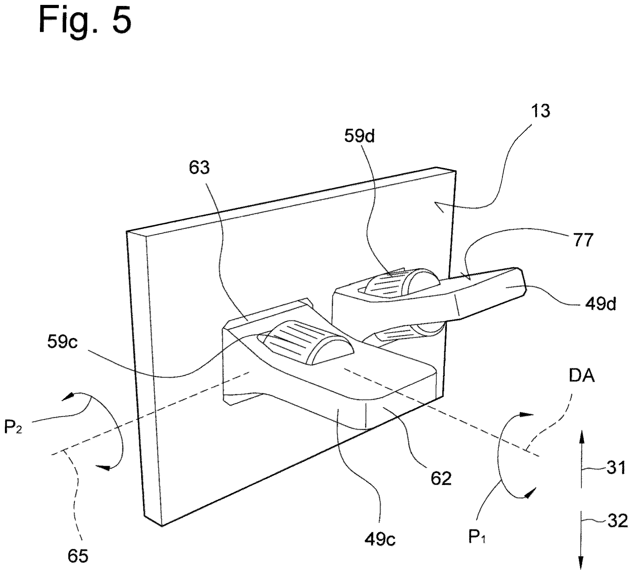

Bei den Ausführungsbeispielen der Fig. 4 und 5 sind hingegen die jeweiligen Stellelemente 59a, 59b, 59c, 59d näher an der Gehäusefront 13 bzw. näher dem angelenkten Ende 63 des jeweiligen Betätigungshebels 49a, 49b, 49c, 49d angeordnet. Hier sind die Betätigungsflächen 77 des entsprechenden Betätigungshebel 49a, 49b, 49c, 49d im Bereich des freien Endes 62 angeordnet.

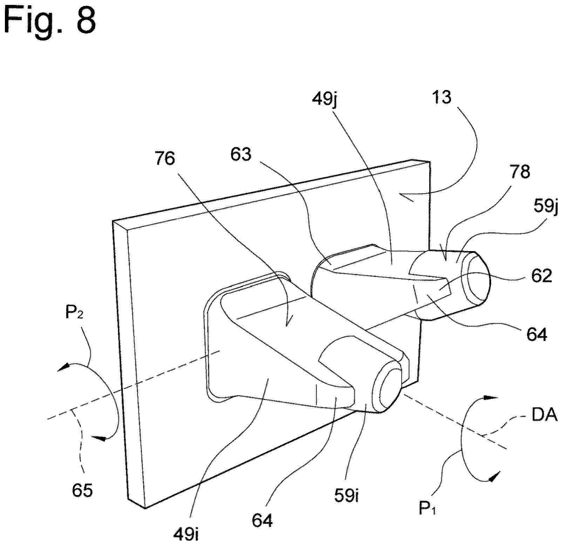

Angemerkt sein, dass bei den Ausführungsbeispielen der Fig. 6 und 8 Abschnitte 64 vorgesehen sind, die das Stellelement 59e, 59f, 59i, 59j teilweise einfassen. Hierdurch können Fehlbedienungen sicher vermieden werden, da jeweils nur ein Teil der jeweiligen Mantelfläche 78 des jeweiligen Stellelementes 59e, 59f, 59i, 59j zugänglich ist.

Angemerkt sei des Weiteren, dass sämtliche der Stellelemente 59a bis 59j gemäß der Ausführungsbeispiele der Fig. 4 bis 8 jeweils um eine Drehachse DA, DA₁, DA₂ entlang einem durch den Pfeil P₁ vorgegebenen Drehsinn und dazu gegenläufig drehbar sind, wobei die entsprechende Drehachse DA, DA₁, DA₂ einer Richtung entspricht, entlang welcher der jeweilige Betätigungshebel 49a bis 49j längsgestreckt ausgebildet ist.

Während die Schwenkachse 65, um die das Betätigungselement 49 jeweils schwenkbar ist, also in dem Drehsinn des Pfeils P₂, um aus der Mittelposition 39a in eine der beiden Schaltpositionen 39b, 39c überführt zu werden, im Wesentlichen entlang der Gehäusefront 13 oder parallel zu der Gehäusefront 13 verläuft, steht die Drehachse DA, DA₁, DA₂ um die das Stellelement 59a, 59b, 59c, 59d, 59e, 59f, 59g, 59h, 59i, 59j drehbar ist, senkrecht zu der Schwenkachse 65 des Betätigungselementes.

Ausweislich des Ausführungsbeispiels der Fig. 9 ist von der Erfindung auch umfasst, wenn das Betätigungselement 49k, 49l als Ganzes um eine Schwenkachse DA₁, DA₂ schwenkbar oder kippbar ist. Hier reicht eine geringe, maximal zugelassene Verschwenkung oder Verkippung um einen vorgegebenen Winkel, von nur wenigen Grad, beispielsweise 10°, 20° oder 30° aus.

Die Drehung oder Betätigung eines Stellelementes 59a bis 59j oder die Verkippung oder Verschwenkung eines Bedienelementes 49k, 49l um eine Schwenkachse DA, DA₁, DA₂ kann durch geeignete Sensoren erfasst und detektiert werden. Auch der Drehsinn bzw. die Verschwenkrichtung oder der Verschwenksinn kann gleichermaßen erfasst werden.

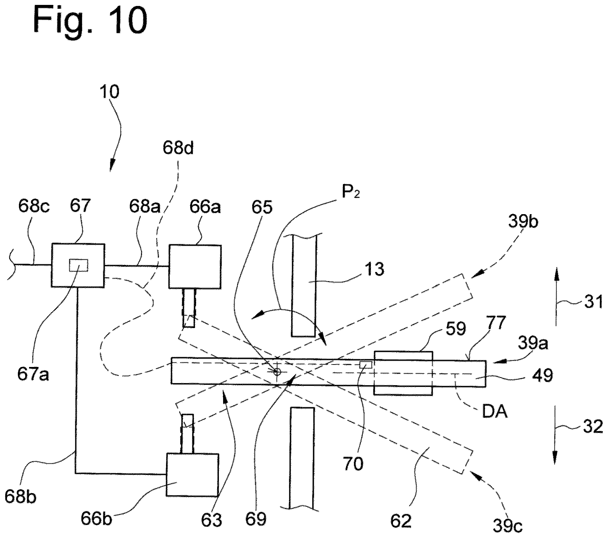

Ausweislich Fig. 10 ist in einer sehr schematischen Darstellung, in einer teilgeschnittenen schematischen Ansicht, ein Bereich der Sprechstelle 10 veranschaulicht. Dargestellt ist hier lediglich ein Betätigungshebel 49, ein Ausschnitt aus der Gehäusefront 13, eine Öffnung 69 in der Gehäusefront 13, die von dem Betätigungshebel 49 durchgriffen wird, eine Schwenkachse 65, um die der Betätigungshebel 49 verschwenkbar ist, und die z. B. fest relativ zur Gehäusefront 13 angeordnet ist. Bei diesem Ausführungsbeispiel ist ein Stellelement 59 an dem Hebel 49 angedeutet, das beispielsweise nach Art des Stellelementes 59a der Fig. 4 ausgebildet sein kann, wobei Fig. 10 wiederum nicht maßstäblich ist.

Die blockschaltbildartige Darstellung der Fig. 10 zeigt den Betätigungshebel 49 in seiner Mittelposition 39a in durchgezogenen Linien und die beiden Schaltpositionen oder Arbeitspositionen 39b, 39c in gestrichelten Linien.

Ausweislich der Fig. 10 können Schalter, Detektoren oder Sensorelemente 66a, 66b an der Sprechstelle 10 vorgesehen sein, die das Erreichen einer Schaltposition oder Arbeitsposition 39b, 39c des Betätigungshebels 49 durch Kontaktieren feststellen können. Die beiden Detektoren oder Schalter 66a, 66b sind über schematisch dargestellte Signal- oder Verbindungsleitungen 68a, 68b mit einer Recheneinheit oder Steuerung 67 verbunden. Die Steuerung 67 kann über eine lediglich abgebrochen dargestellte Verbindungs- oder Signalleitung 68c mit weiteren, nicht dargestellten elektronischen Bauelementen der Sprechstelle 10 verbunden sein.

Die Art und Ausbildung der Schalter und Sensoren 66a, 66b ist für die Erfindung nicht maßgeblich. Hier kann auch auf herkömmliche Anordnungen zurückgegriffen werden. Entscheidend ist, dass die Sprechstelle 10 in der Lage ist, das Erreichen einer Schalt- oder Arbeitsposition 39b, 39c des Bedienhebels 49 festzustellen, zu detektieren und datenmäßig oder elektronisch weiterzuverarbeiten. Erst bei Feststellung des Erreichens einer Schaltposition wird die Sprechstelle 10 eine Audio-, also eine Hör- oder Sprech- oder Hör- und Sprech-Verbindung zu einer anderen Sprechstelle 18a, 18b des Intercom-Netzwerkes 11 aufbauen.

Ausweislich Fig. 10 ist, schematisch dargestellt, an dem Betätigungshebel 49 ein Stellelement 59 angeordnet. Dieses ist um eine schematisch angedeutete Drehachse DA drehbar. An dem Betätigungshebel 49 ist darüber hinaus - wiederum lediglich schematisch angedeutet - ein Sensor 70 angeordnet. Der Sensor 70 kann ebenfalls ein Detektor oder Schalter sein. Bei weiteren, nicht dargestellten Ausführungsbeispielen der Erfindung kann der Sensor 70 auch fest an oder fest relativ zu der Sprechstelle 10 bzw. zu dem Gehäuse 12 der Sprechstelle angeordnet sein.

Der Sensor 70 kann eine Betätigung des Stellelementes 59 detektieren. Je nach Ausgestaltung des Stellelementes 59 kann der Sensor 70 auch den Drehsinn feststellen, also ob das Stellelement 59a im Uhrzeigersinn oder entgegen dem Uhrzeigersinn um die Drehachse DA rotiert wird.

Darüber hinaus kann der Sensor 70 feststellen, wie viele Umdrehungen das Stellelement 59 durchläuft. Alternativ kann auch ein Drehwinkel des Stellelementes 59 festgestellt werden.

Diese erfassten Informationen können über die lediglich schematisch angedeutete Steuersignalleitung 68d ebenfalls an die Recheneinheit oder Steuereinheit 67 übermittelt werden.

Dort kann auf Basis der enthaltenen Informationen ein Parameter eingestellt oder geändert oder eine solche Änderung veranlasst werden.

Vorteilhafterweise ist gemäß einer Ausführungsform der Erfindung der Parameter eine Lautstärke oder ein Lautstärkesignal oder ein Maß für die Lautstärke oder ein Lautstärkesignal oder er steht mit der Lautstärke oder dem Lautstärkesignal in Relation.

Vorteilhafterweise ist dabei vorgesehen, dass entweder der Drehwinkel, um den das Stellelement 59 gedreht wird, oder die Zahl der Umdrehungen des Stellelementes 59 oder die Zeit, während der das Stellelement 59 betätigt wird, als Maß für die Parameteränderung verwendet wird.

Ausweislich der Fig. 4, 5, 6 und 7 sind an der Mantelfläche 78 des Stellelementes 59 Vorsprünge, vorliegend in Form von Rippen 61, angeordnet. Diese erleichtern eine Betätigung des Stellelementes 59e, 59f, 59g, 59h.

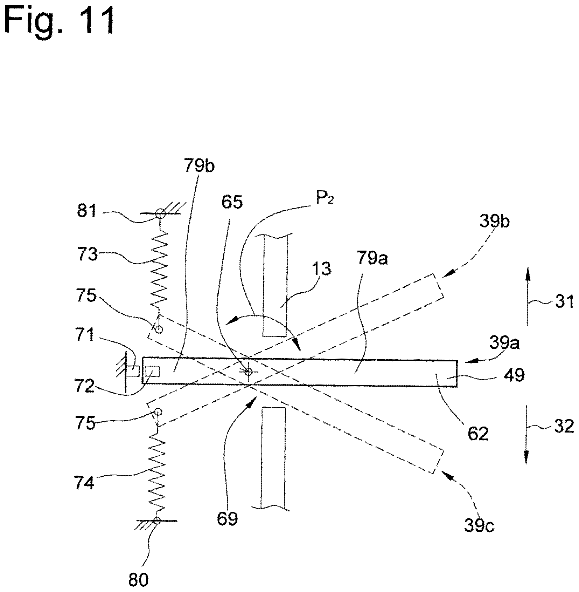

Ausweislich der Fig. 11 soll nun ein weiterer Aspekt der Erfindung beschrieben werden:
Fig. 11 zeigt in einer Darstellung, vergleichbar der Fig. 10, ein weiteres Ausführungsbeispiel einer erfindungsgemäßen Sprechstelle 10.

Hier ist an dem Betätigungshebel 49 kein Stellelement 59 angeordnet. Bei weiteren Ausführungsbeispielen dieser Erfindung kann an dem Betätigungshebel 49 aber sehr wohl ein Stellelement 59 angeordnet sein.

Der Betätigungshebel 49 kann auch beim Ausführungsbeispiel gemäß Fig. 11 - in entsprechender Darstellung und Funktion des Ausführungsbeispiels der Fig. 9 - insgesamt schwenkbar oder kippbar um eine Achse DA ausgebildet sein, die entlang einer Längsrichtung des Betätigungshebels 49 verläuft, wie in Fig. 9 dargestellt.

Ausweislich des Ausführungsbeispiels der Fig. 11 geht es bei dieser Erfindung aber darum, einer Bedienperson, die einen Betätigungshebel 49 an einer Sprechstelle 10 betätigt, ein besonderes taktiles Verhalten eines Betätigungshebels 49 bereitzustellen. Hierdurch wird einerseits ein erhöhter Komfort, zum anderen eine bessere Informationsverwertung für die Bedienperson ermöglicht:
Ausweislich Fig. 11 ist der Betätigungshebel 49 - analog zu der Darstellung der Fig. 10 - um eine Schwenkachse 65 schwenkbar. Das jeweils freie Ende 62 des Hebels 49 kann, ausgehend von einer Mittelposition 39a, in eine der beiden Schaltpositionen 39b, 39c verlagert werden. Dies erfolgt durch einen Kraftangriff am freien Ende 62 durch einen nicht dargestellten Finger eines Benutzers, entweder in Vertikalrichtung 31, also entlang der ersten Richtung, oder in Gegenrichtung 32.

Das Ausführungsbeispiel der Fig. 11 verdeutlicht, dass der Hebel 49 um eine fest, relativ zu der Gehäusefront 13 oder relativ zu einem Gehäuse 12 der Sprechstelle 10 angeordnete Schwenkachse 65 verschwenkbar ist. Das Hebelelement 49 umfasst insoweit zwei Hebelarme, nämlich einen ersten Hebelarm 79a und einen zweiten Hebelarm 79b.

Im Bereich des zweiten Hebelarmes 79b ist an dem Betätigungshebel 49 ein Gegenmagnet 72 angeordnet, der mit einem fest, relativ zu dem Gehäuse 12 der Sprechstelle 10 angeordneten Magneten 71 kooperiert. Magnet 71 und Gegenmagnet 72 sind so ausgebildet, dass sie sich anziehen. Aus der Geometrie der Fig. 11 wird deutlich, dass der Magnet 71 den Magneten 72 aufgrund der Ausübung der magnetischen Kräfte derartig beaufschlagt, dass das Hebelelement 49 in seine Mittelposition 39a gemäß Fig. 1 hin vorgespannt wird.

Wird das Hebelelement 49, nun ausgehend von der Mittelposition 39a, hin in eine Arbeitsposition 39b oder 39c verlagert, müssen die Kraft des Magneten 71 sowie weitere, von Federelementen 73 und 74 generierte Kräfte überwunden werden. Da die Magnetkräfte aber nur in einem sehr kurzen Nahbereich wirken, reicht eine geringe Verschwenkung des Hebels 49 um einen geringen Verschwenkwinkel, von beispielsweise 5° oder 10° oder 15°, um die Magnetkräfte außer Kraft zu setzen. Die Magnete 71 und 72 sind dabei vorteilhafte so konstruiert und angeordnet, dass sie nur in einem Nahbereich wirken. Anders ausgedrückt, werden die Magnetkräfte der Magneten 71, 72 unwirksam, wenn sich der Betätigungshebel 49 in einer Position befindet, geringfügig entfernt von der Mittelposition 39a.

Angemerkt sei an dieser Stelle, dass der Gegenmagnet 72 ein Element sein kann, welches an dem Betätigungshebel 49 fest angeordnet ist. Alternativ kann auch ein Materialabschnitt oder auch das gesamte Betätigungselement 49 aus magnetischem oder magnetisierbarem Material bestehen.

Ausweislich der Fig. 11 ist darüber hinaus ein erstes Federelement 73 und ein zweites Federelement 74 vorgesehen. Die Federelemente 73, 74 sind jeweils mit einem Federende an einem Federanlenkpunkt 75 an dem zweiten Hebelarm 79b oder an einem anderen Bereich des Hebel 49 an diesem befestigt. Die Federn 73, 74 sind ausweislich des Ausführungsbeispiels der Fig. 11 als Zugfedern ausgebildet. Jedes der beiden Federelemente 73, 74 ist also versucht, das Betätigungselement 49 mit dem Ende des zweiten Hebelarms 79b an sich heranzuziehen. Eine stabile Gleichgewichtslage ist dabei erreicht, wenn sich der Hebel 49 in seiner Mittelposition 39a befindet, da sich hier die Federkräfte der beiden Federelemente 73, 74 aufheben.

Wird ausgehend von der Mittelposition 39a der Betätigungshebel 49 hin in die zweite Arbeitsposition 39c verlagert, entfernt sich der Anlenkpunkt 75 von dem festgehaltenen Ende 80 des zweiten Federelementes 74, so dass die von dem zweiten Federelement 74 auf den Hebel 49 ausgeübte Kraft, die Rückstellkraft, zunimmt. Zugleich nähert sich der Federanlenkpunkt 75 an das festgehaltene Ende 81 des ersten Federelementes 73 an, so dass durch dieses Federelement 73 keine Kraft auf den Hebel 49 ausgeübt wird.

Das Bewahren der Schaltposition 39c erfordert also, dass die Bedienperson dauerhaft auf das freie Ende 62 des Hebels 49 eine Kraft in Richtung 32 ausübt, die größer ist als die Haltekraft des Federelementes 74.

Da das Federelement 74 (aber gleichermaßen auch das Federelement 73) aber nur sehr schwach ausgelegt sind, kann diese von der Bedienperson auszuübende Haltekraft sehr gering ausgelegt werden. Dies ermöglicht, dass die Bedienperson mit nur geringen Haltekräften, also mit hohem Komfort die Arbeitsposition 39c bewahrt.

Sobald die Bedienperson die Arbeitsposition oder Schaltposition 39c aufheben möchte, kann sie die Kraftausübung auf den Hebel 49 abrupt oder allmählich beenden, so dass aufgrund der von dem Federelement 74 ausgeübten Kraft der Hebel 49 aus der Arbeitsposition 39c infolge einer Schwenkbewegung entgegen den Uhrzeigersinn um die Schwenkachse 65 hin in Richtung seiner Mittelposition 39a verlagert wird. Dabei sorgt zunächst lediglich die Feder 74 für ein Rückholen des Hebels 49.

Erst wenn sich der Hebel 49 seiner Mittelposition 39a angenähert hat, und Magnet 71 und Magnet 72 wieder einander so weit angenähert sind, dass die magnetischen Kräfte wirken können, beschleunigt sich die weitere Rückholbewegung des Hebels 49 hin in seine Mittelposition 39a bzw. erfolgt diese unter Ausbildung einer größeren Vorspannkraft.

Die Kraftkomponenten der von den Magneten 71, 72 ausgeübten Kraft und der von den Federelementen 73, 74 ausgeübten Kraft addieren sich also bzw. sind parallel geschaltet. Allerdings wirken die von den Magneten 71, 72 ausgeübten Kräfte nur im Nahbereich. Als Nahbereich werden also Schwenkpositionen des Betätigungshebels 49 bezeichnet, die nahe seiner Mittelposition 39a angeordnet sind.

Hierdurch, und durch eine Auslegung der Kraftdimension, beispielsweise derart, dass die nur im Nahbereich wirkenden magnetischen Kräfte der Magnete 71, 72 größer oder höher ausgelegt werden, als die von den Federelementen 73, 74 ausgeübten Kräfte, können dafür sorgen, dass die erreichte Schaltposition 39b, 39c von einer Bedienperson mit weniger Kraftaufwand und damit ermüdungsfrei und komfortabler gehalten werden kann.

Andererseits wird einem Benutzer durch die im Nahfeld wirkenden hohen magnetischen Kräfte, deren Kraftwirkung auch zu einer Verschwenkbewegung des Betätigungselements 49 führt, die eher abrupt einsetzt, deutlich taktil signalisiert, dass der Hebel 49 seine Mittelposition 39a erreicht hat oder kurz davor ist, zu erreichen.

Im Übrigen ist anzumerken, dass die Recheneinheit oder Steuereinheit 67 auch einen Speicher 67a aufweisen kann, der zur Speicherung der eingestellten oder geänderten Parameterwerte dienen kann oder zur Weiterverarbeitung dieser Werte dienen kann.

Beim Ausführungsbeispiel der Fig. 11 sind zwei Zugfederelemente 73, 74 beschrieben. Bei weiteren Ausführungsbeispielen der Erfindung ist nur ein Federelement vorgesehen.

Schließlich können anstelle von Zugfedern auch Druckfedern oder Blattfedern oder andere Rückstellkräfte generierende Federelemente vorgesehen sein.

Entscheidend ist, dass wenigstens ein herkömmliches erstes Federelement über den gesamten Schwenkbereich zwischen Mittelposition 39a und der jeweiligen Schaltposition 39b, 39c wirksam wird, wobei die Rückstellkräfte zu zunehmender Auslenkung des Betätigungselementes zunehmen, wobei dieses Federelement insgesamt schwächer ausgebildet ist, und dass dazu parallel ein zweites Federelement vorgesehen ist, welches nur in einem Nahbereich wirkt, welches unter Zuhilfenahme eines Magneten Rückstellkräfte generiert.

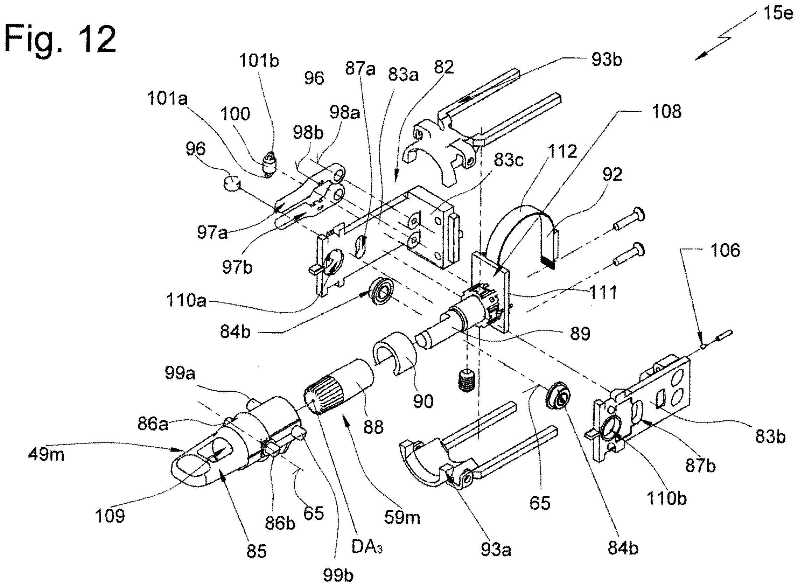

Anhand der Figuren 12 bis 19 soll nun ein weiteres Ausführungsbeispiel eines Bedienelementes 15e für eine erfindungsgemäße Sprechstelle veranschaulicht werden:
Ausweislich Fig. 12 umfasst das Bedienelement 15 eine Vielzahl von Einzelteilen:
Fig. 12 zeigt zunächst ein Element 49m, das den Betätigungshebel ausbildet. Dieses umfasst einen Korpus 85, der eine Aufnahme 109 aufweist, durch die hindurch ein um die Drehachse DA₃ drehbares Stellelement 59m eingesetzt werden kann. Der Korpus 85 umfasst zwei Stutzen 86a, 86b, oder Zapfen, die ein Schwenklager ausbilden, und die Schwenkachse 65 des Betätigungshebels 49m bereitstellen.

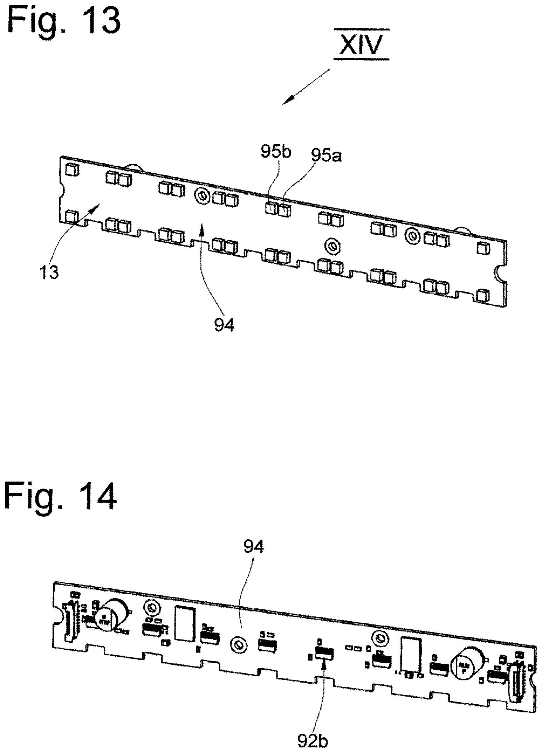

Im montierten Zustand sind diese Schwenklagerstutzen 86a, 86b in dafür vorgesehenen Öffnungen 110a, 110b in Seitenwänden 83a, 83b gelagert. Die Seitenwände 83a, 83b bilden gemeinsam mit einer Rückwand 83c eine Schwenkhalterung 82 für den Betätigungshebel 49m aus. Die Schwenkhalterung 82 ist relativ zu der Gehäusefront 13 der Sprechstelle, insbesondere an der in Fig. 13 dargestellten Leiterplatte 94, festgelegt.

An dem Korpus 85 sind darüber hinaus nockenförmige Stutzen 99a, 99b angeordnet, die gekrümmte Kulissenschlitze 87a, 87b in der entsprechenden Seitenwand 83a, 83b durchgreifen.

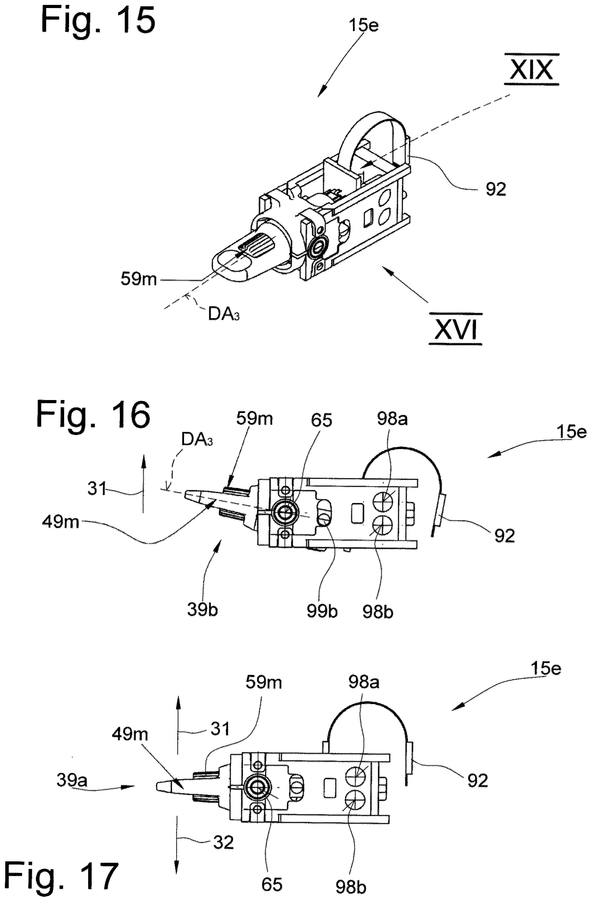

Wie die Figuren 16 bis 18 in unterschiedlichen Schwenkstellungen des Hebelelementes 49m zeigen, begrenzen die Kulissenschlitze 87a, 87b die Schwenkbewegung des Hebels 49m infolge eines Anschlagens der Stutzen 99a, 99b an den Enden der Kulissenschlitze 87a, 87b.

Der Vollständigkeit halber sei angemerkt, dass die Lagerung der Schwenklagerstutzen 86a, 86b in der jeweiligen Gehäuseseitenwand 83a, 83b unter Zwischenschaltung von Kugellagern 84a, 84b erfolgen kann.

Ausweislich Fig. 12 ist darüber hinaus ein Magnet 96 vorgesehen, der fest an der oder relativ zu der Seitenwand 83a angeordnet ist. Fig. 12 veranschaulicht des weiteren ein Paar von metallischen Hebeln 97a, 97b, die jeweils um eine Hebelschwenkachse 98a, 98b schwenkbar sind. Die beiden Hebel 97a, 97b sind unter Zuhilfenahme eines Federelementes 100 aufeinander zugespannt.

Die Anbindungsenden des Federelementes 100 sind mit 101a und 101b bezeichnet.

Bei in Mittelstellung 39a befindlichem Betätigungshebel 49m gemäß den Figuren 15 und 17 befinden sich die beiden Mitnehmernocken 99a, 99b exakt mittig zwischen den beiden Hebeln 97a, 97b.

Wird der Hebel 49m ausgehend von Mittelposition 39a gemäß Fig. 17 in eine erste Schaltposition 39b gemäß Fig. 16 in Vertikalrichtung 31 ausgelenkt, kontaktiert die von dem Ende des Stutzens 99a bereitgestellte Mitnehmernocke 99a den unteren Hebel 97b und verlagert diesen bezogen auf Fig. 12 entgegen dem Uhrzeigersinn um die zugehörige Schwenkachse 98b.

Hierdurch entfernt sich zunächst das freie Ende dieses Hebels 97b von dem ortsfest gehaltenen Magneten 96, was die Ausübung einer ersten Kraft erfordert; Diese ist erforderlich, um die magnetischen Haltekräfte zwischen dem Magneten 96 und den metallischen, insbesondere aus Eisen bestehenden Hebeln 97a, 97b, zu überwinden.

Sobald das freie Ende des metallischen Hebelelements 97b aus dem Einflussbereich des Magneten 96 heraus gelangt ist, ist nur noch das - demgegenüber schwächer ausgelegte - Federelement 100 bestrebt, die beiden Hebelelemente 97a und 97b in ihre Mittellage - aufeinander zu - zu spannen. Der Benutzer braucht, um das Hebelelement 49m in einer ersten Schaltposition 39b gemäß Fig. 16 dauerhaft zu halten, nur eine Kraft aufzuwenden, die der Kraft des Federelementes 100 entgegensteht.

Auch in diesem Falle ist insoweit das Federelement 100 zu der Anordnung aus dem Magnet 96 und dem Gegenmagnet (ausgebildet durch die metallischen Hebel 97a, 97b) parallel geschaltet.

Bei diesem Ausführungsbeispiel wirken im Nahbereich die magnetischen Kräfte und die Kraft der mechanischem Feder 100 parallel, und, sobald der Hebel aus der Mittelposition heraus um einige Grad verschwenkt ist, wirken nahezu ausnahmslos nur noch die mechanischen Federkräfte des Federelementes 100.

Auch hier kooperiert der Hebel 49m insoweit mittelbar über die Hebel 97a, 97b mit dem Magneten 96.

Das Paar mechanischer Hebelelemente 97a, 97b kann an der ersten Seitenwand 83a oder an der zweiten Seitenwand 83b oder weiter alternativ auch zwischen den beiden Seitenwänden 83a, 83b angeordnet sein. Vorteilhafterweise ist das jeweilige Hebelelement 97a, 97b unmittelbar an der Seitenwand 83a gelagert.

Das Federelement 100 kann beispielsweise als Zugfeder ausgebildet sein, und an seinen beiden axialen Endbereichen Anbindungsbereiche 101a, 101b aufweisen, die mit in den Figuren nicht detailliert dargestellten Gegenbefestigungsbereichen an den beiden Hebelelementen 97a, 97b zusammenwirken können. Die Anordnung von Federelement 100 und Hebelelementen 97a, 97b kann so getroffen sein, dass das Federelement 100 mit seinen Enden 101a, 101b an entsprechende Vorsprünge an den beiden Hebelelementen 97a, 97b eingehängt oder auf sonstige Weise eingesetzt oder befestigt werden kann.

Bei dem Ausführungsbeispiel der Figuren 12 bis 19 ist das Stellelement 59m als Drehknopf 88 ausgebildet, und gemeinsam mit dem Betätigungshebel 49m verschwenkbar.

Der Drehknopf 88 sitzt auf einem Stutzen 89 einer Encoder-Einheit 108. Als Encoder-Einheit 108 wird eine Anordnung bezeichnet, die neben einer Encoder-Platine 111 auch ein Drehlager für den drehbaren Encoder-Stutzen 89 aufweist.

Fig. 12 zeigt noch schematisch angedeutet einen Distanzring 90, der zwischen der Encoder-Einheit 108 und dem Betätigungshebel 49m anzuordnen ist.

Die Encoder-Einheit 108 verfügt darüber hinaus vorteilhaft über einen Steckverbinder 92, der mit einem Gegensteckverbinder 92b an der Platine 94 der Sprechstelle verbunden werden kann.

Da die Encoder-Einheit 108 bei diesem Ausführungsbeispiel gemeinsam mit dem Betätigungshebel 49m verschwenkbar ist, ist der Steckverbinder mit einer flexiblen Leiterlose 112 ausgestattet, die einen entsprechenden Bewegungsraum zulässt.

Auf der Platine 94 sind mehrere Gruppen von LEDs 95a, 95b, 95c, 95d, 95e vorgesehen, die jeweils einen Lichtleiter 93a, 93b mit Licht beaufschlagen können. Der Lichtleiter illuminiert das Bedienelement 15.

Fest relativ zur Seitenwand 83b der Schwenklagerung 82 ist ein Schaltmagnet 106 angeordnet. Dieser wirkt zusammen mit auf der Rückseite der Encoder-Platine 111 angeordneten Hallsensoren, die die unterschiedlichen Arbeitspositionen 39b, 39c des Betätigungshebels 49m relativ zu der Seitenwand 83b detektieren können.

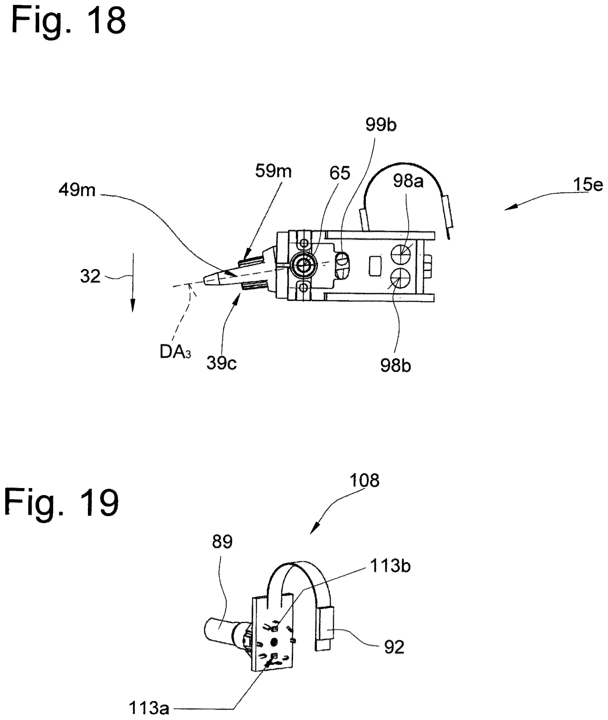

Die beiden - gemeinsam mit dem Hebel 49m verschwenkbaren - Hallsensoren sind in Fig. 19 mit 113a, 113b bezeichnet. Die Hallsensoren 113a, 113b können eine relative Nähe zu dem fest angeordneten Schaltmagnet 106 in der Gehäusewand feststellen.

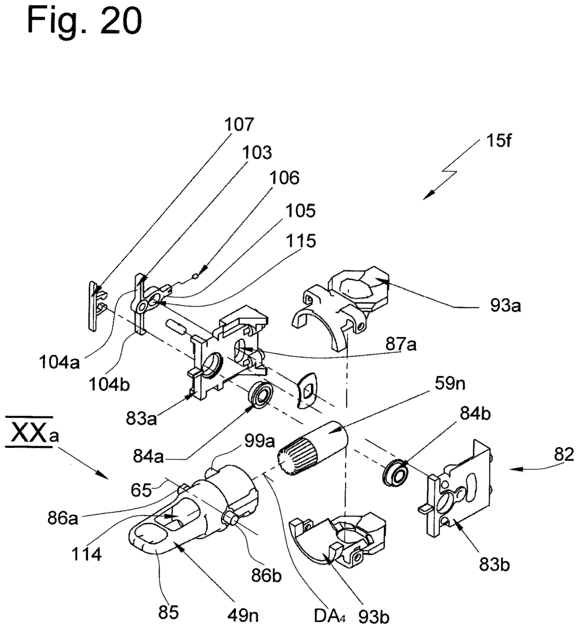

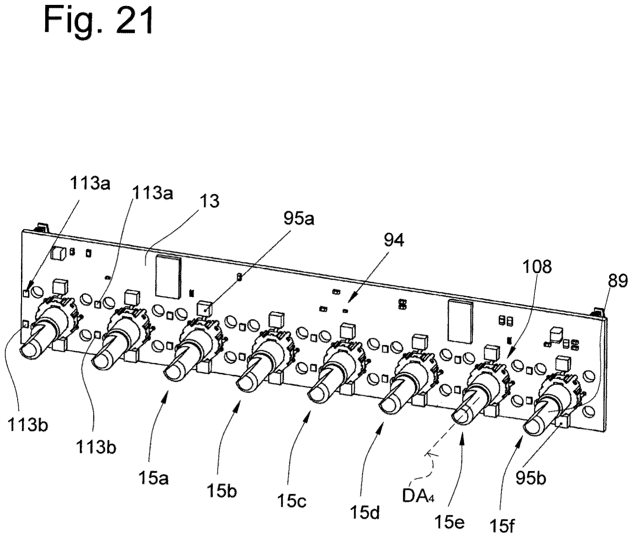

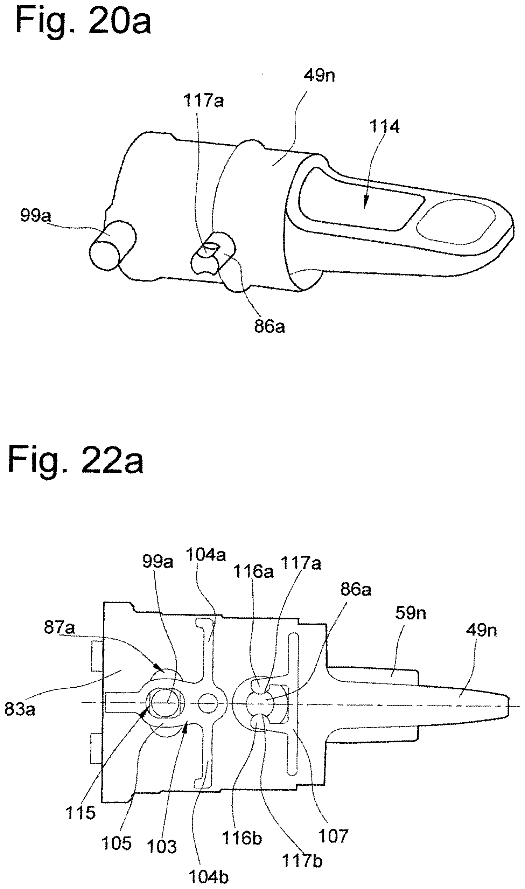

Ein weiteres Ausführungsbeispiel eines Bedienelementes 15f einer erfindungsgemäßen Sprechstelle 10 wird nachfolgend anhand der Figuren 20 bis 25 erläutert:
Bei diesem Ausführungsbeispiel ist ausweislich Fig. 20 das Hebelelement 49n wiederum mit Schwenklagerstutzen 86a, 86b ausgestattet, die unter Zwischenschaltung von Kugellagern 84a, 84b in den Seitenwänden 83a, 83b einer Schwenkhalterung 82 gelagert sind. Die Schwenkhalterung 82 ist fest relativ zu einer Platine oder Leiterplatte 94 angeordnet, die der Gehäusefront 13 der Sprechstelle entspricht, oder parallel zu dieser, in Blickrichtung des Betrachters der Fig. 21 hinter der Gehäusefront 13, angeordnet sein kann.

Wiederum umfasst jedes Bedienelement 15f eine Encoder-Einheit 108, die fest an der Platine 94 angeordnet ist. Von der Encoder-Einheit 108 geht - wie bei dem zuvor beschriebenen Ausführungsbeispiel - jeweils ein Stutzen 89 ab, auf dem ein Stellelement 59n in Form eines Drehknopfes um eine Drehachse DA₄ drehbar positioniert ist.

Bei dem Ausführungsbeispiel der Figuren 20 bis 25 ist das Stellelement 59n ortsfest relativ zu der Platine 13 angeordnet, also nicht mit dem Hebel 49n schwenkbeweglich.

Hierfür umfasst der Hebel 49n eine Ausnehmung 114, durch die das Stellelement 59n hindurch tauchen kann.

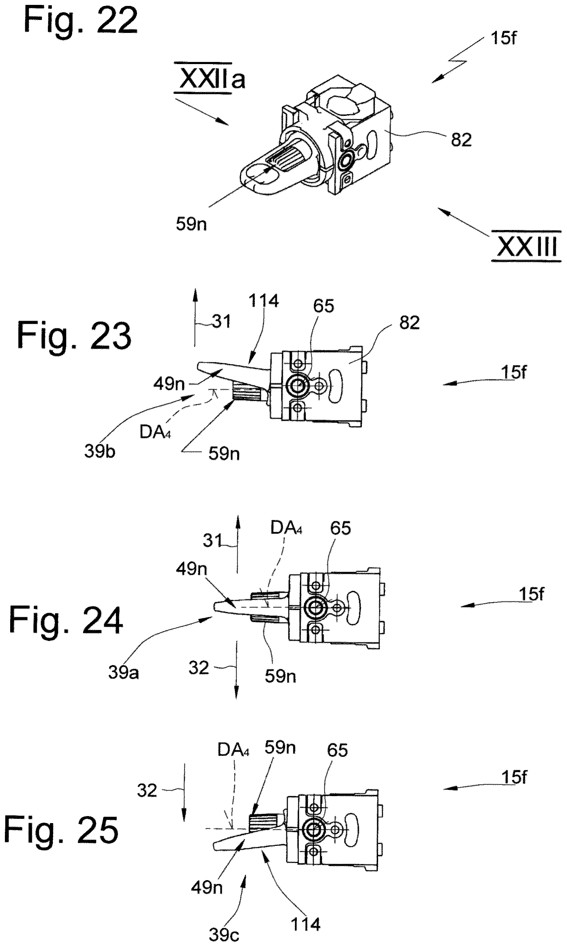

Die Figuren 23 bis 25 zeigen unterschiedliche Positionen, insbesondere eine Ruhe- bzw. zwei Arbeitspositionen 39a, 39b, 39c des Hebelelementes 49n, relativ zu dem Stellelement 59n, und verdeutlichen, dass der Betätigungshebel 49n das Stellelement 59n - in sämtlichen Positionen des Hebels - übergreift.

Der Betätigungshebel 49n weist einen Korpus 85 auf, der über eine Mitnehmernocke 99a verfügt. Diese durchdringt einen entsprechenden Kulissenschlitz 87a in der Gehäusewand 83a.

Fest relativ zu der Gehäusewand 83a ist ein Federelement 103 angeordnet, welches zwei vertikale Haltearme 104a und 104b sowie einen horizontalen Verstellarm 105 aufweist. In dem horizontalen Verstellarm 105 ist eine Ausnehmung oder Aufnahme 115 angeordnet, in die die Mitnehmernocke 99a eingreift.

Die vertikalen Schenkel 104a und 104b sind fest relativ zu der Gehäusewand 83a angeordnet und legen das Federelement 103 insgesamt an der Gehäuseseitenwand 83a fest.

Wird das Hebelelement 49n aus der Ruheposition gemäß Fig. 24 in eine Arbeitsposition verschwenkt, vollführt die Nocke 99a eine kreisförmige Bewegung um die Drehachse 65, und fährt den Kulissenschlitz entlang. Dabei nimmt sie den Verstellarm 105 des Federelementes mit, und zwar unter Überwindung der von dem Federarm 105 aufgebrachten Rückstellkraft.

Zugleich wird ein Schaltmagnet 106, der an dem freien Ende des auslenkbaren Armes 105 des Federelementes 103 angeordnet ist, mit verlagert.

Der Schaltmagnet 106 kann in den ausgelenkten Lagen, also bei Erreichen einer Arbeitsposition des Hebelelementes 49n, mit Hallschaltern oder Hallsensoren 113a, 113b zusammenwirken, die an der Platine 94 angeordnet sind. Die ausgelenkte Schaltposition 39b oder 39c des Hebelelementes 49n kann von den Hallsensoren 113a, 113b entsprechend detektiert werden.

Sobald die Bedienperson keine weitere Kraft mehr auf das Hebelelement 49n ausübt, sorgt das Federelement 103 für ein Rückverstellung des Hebelelementes 49n in die Mittellage 39a gemäß Fig. 24.

Fig. 20 deutet darüber hinaus ein Rastelement 107 an, das für eine Mittenrastung des Hebelelementes 49n auf mechanische Art und Weise sorgen kann:
Das Rastelement 107 kann z. B. Federvorsprünge 116a, 116b, wie am besten in Fig. 22a erkennbar, aufweisen, die zum Beispiel mit entsprechenden komplementären Flächen, insbesondere Rücksprüngen 117a, 117b, an dem in Fig. 22a erkennbaren Schwenklagerstutzen 86a kooperieren können, so dass das Erreichen der Mittellage des Hebels 49n durch einen taktil signalisierbaren Rastmechanismus angezeigt wird.

Auch bei dem Ausführungsbeispiel der Figuren 20-25 ist infolge einer unmittelbaren und eindeutigen sowie räumlich sehr nahen Zuordnung des Stellelementes 59n zu dem entsprechenden Betätigungshebel 49n eine besonders komfortable, sichere und fehlerfreie Bedienung und Betätigung möglich.

Bei sämtlichen Ausführungsbeispielen der vorliegenden Patentanmeldung kann darüber hinaus - optional - vorgesehen sein, dass das Stellelement 59a, 59b, 59c, 59d, 59e, 59f, 59g, 59h, 59i, 59j, 59k, 591, 59m, 59n in Richtung seiner jeweiligen Drehachse DA, DA₁, DA₂, DA₃, DA₄ axial verlagerbar ist, und eine Tasterfunktion ausüben kann. Die Axialverlagerung des Stellelementes 59 kann über ein in den Figuren nicht dargestelltes Sensorelement detektiert werden.

Beispielsweise kann durch Drehung des Stellelementes 59a, 59b, 59c, 59d, 59e, 59f, 59g, 59h, 59i, 59j, 59k, 59l, 59m, 59n ein Parameterwert eingestellt werden, und durch Tasten, d. h. durch Axialverlagerung des Stellelementes, der eingestellte Parameterwert gespeichert oder übernommen werden.

Von der Erfindung ist auch umfasst, wenn eine Axialbetätigung des Stellelementes 59 initial vorgenommen werden muss, um eine Einstellung des Parameterwertes durch nachfolgendes Drehen des Stellelementes 59a, 59b, 59c, 59d, 59e, 59f, 59g, 59h, 59i, 59j, 59k, 591, 59m, 59n durchführen zu können, und nachfolgend nochmals in Axialrichtung eine Tasterbetätigung durchgeführt werden muss, um den Parameterwert zu bestätigen oder zu speichern oder zu übernehmen.

## Patentansprüche

1. Sprechstelle (10) für ein Intercom-Netzwerk (11), umfassend eine Vielzahl von Bedienelementen (15a, 15b, 15c, 15d), die jeweils nach Art eines Hebels (49a, 49b, 49c, 49d, 49e, 49f, 49g, 49h, 49i, 49j) ausgebildet sind, wobei ein Hebel ausgehend von einer inaktiven Mittelposition (39a) manuell entlang einer ersten Richtung (31) in eine erste Schaltposition (39b) oder alternativ entlang einer zu der ersten Richtung entgegengesetzten zweiten Richtung (32) in eine zweite Schaltposition (39c) verlagerbar ist, wobei der Hebel in seine Mittelposition hin vorgespannt ist, **dadurch gekennzeichnet, dass** der Hebel (49) unmittelbar oder mittelbar mit einem Magneten (71) kooperiert, der auf den in einer Position nahe der Mittelposition befindlichen Hebel hohe, den Hebel in seine Mittelposition hinein beaufschlagende Kräfte ausübt, wobei wenigstens ein von dem Magneten gesondertes Federelement (73, 74) den Hebel zusätzlich in die Mittelposition (39a) hinein beaufschlagt.

2. Sprechstelle nach Anspruch 1, **dadurch gekennzeichnet, dass** der Hebel ein drehbar gelagertes Stellelement (59, 59a, 59b, 59c, 59d, 59e, 59f, 59g, 59h, 59i, 59j) zur Änderung eines Parameters aufweist, oder dass der Hebel ein solches Stellelement übergreift.

3. Sprechstelle nach Anspruch 1 oder 2, umfassend ein insbesondere quaderförmiges Gehäuse (12), mit einer Gehäusefront (13) und einer Gehäuserückseite (14), wobei an der Gehäusefront (13) eine Vielzahl von programmierbaren Bedienelementen (15a, 15b, 15c, 15d) und gegebenenfalls mehrere Displays (16a, 16b, 16c, 16d) angeordnet sind, wobei die Bedienelemente eine Vielzahl von Auswahltasten (17a, 17b, 17c, 17d) umfassen, wobei die Sprechstelle infolge einer Betätigung einer Auswahltaste durch eine Bedienperson eine unmittelbare Hör- und/oder Sprechverbindung zu einer ausgewählten anderen Sprechstelle (18a, 18b) des Intercom-Netzwerkes über eine Vermittlungsstelle (19) bereitstellt, wobei an der Gehäuserückseite (14) eine Vielzahl von Anschlüssen (20a, 20b, 20c, 20d, 20e, 20f, 20g, 20h), wie Spannungsversorgungsanschluss, Datenkabelanschluss, BNC-Anschluss, angeordnet ist, wobei an der Gehäusefront (13) wenigstens ein Lautsprecher (24) oder ein Anschluss (46) für einen Lautsprecher fest angeordnet ist, und wobei an der Gehäusefront wenigstens ein Mikrofon (44) und/oder wenigstens ein Anschluss (45) für ein Mikrofon angeordnet ist, wobei die Auswahltaste nach Art eines Hebels (49) ausgebildet ist.

4. Sprechstelle nach einem der vorangegangenen Ansprüche, **dadurch gekennzeichnet, dass** der Hebel entlang einer geradlinigen Bewegungsbahn verlagerbar, insbesondere verschwenkbar, ist.

5. Sprechstelle nach einem der vorangegangenen Ansprüche, **dadurch gekennzeichnet, dass** an einer Gehäusefront (13) wenigstens ein Anschluss (46) für ein Headset angeordnet ist.

## Claims

1. Conference unit (10) for an intercom network (11), comprising a plurality of control elements (15a, 15b, 15c, 15d), which are each designed according to a type of lever (49a, 49b, 49c, 49d, 49e, 49f, 49g, 49h, 49i, 49j), wherein a lever can be mounted starting from an inactive middle position (39a) manually along a first direction (31) into a first switching position (39b), or alternatively along a second direction (32), in opposition to the first direction, into a second switching position (39c), wherein the lever in pretensioned in its middle position, **characterised in that** the lever (49) cooperates directly or indirectly with a magnet (71) that exerts high forces on the lever located in a position near the middle position, the lever being forced down into its middle position, wherein at least one spring element (73, 74) separated from the magnet additionally presses the lever into the middle position (39a).

2. Conference unit according to claim 1, **characterised in that** the lever has a rotatably mounted actuator (59, 59a, 59b, 59c, 59d, 59e, 59f, 59g, 59h, 59i, 59j) to change a parameter, or **in that** the lever overlaps such an actuator.

3. Conference unit according to claim 1 or 2, comprising an in particular cuboid-shaped housing (12) having a housing front (13) and a housing back (14), wherein a plurality of programmable control elements (15a, 15b, 15c, 15d) and if necessary multiple displays (16a, 16b, 16c, 16d) are arranged on the housing front (13), wherein the control elements comprise a plurality of selection buttons (17a, 17b, 17c, 17d), wherein, as a result of an actuation of a selection button by a control person, the conference unit provides an direct voice and/or speech connection to a selected other conference unit (18a, 18b) of the intercom network via an exchange (19), wherein a plurality of connectors (20a, 20b, 20c, 20d, 20e, 20f, 20g, 20h), such as a voltage supply connection, data cable connection, BNC connector, are arranged on the housing back (14), wherein at least one loudspeaker (24) or a connector (46) for a loudspeaker is arranged fixed on the housing front (13), and wherein at least one microphone (44) and/or at least one connector (45) for a microphone is arranged on the housing front, wherein the selection button is designed according to the type of lever (49).

4. Conference unit according to one of the preceding claims, **characterised in that** the lever can be mounted, in particular pivotably, along a straight trajectory.

5. Conference unit according to one of the preceding claims, **characterised in that** at least one connector (46) for a headset is arranged on a housing front (13).

## Revendications

1. Combiné pour un réseau d'interphones (11), comprenant une multitude d'éléments de commande (15a, 15b, 15c, 15d) qui sont configurés chacun en forme de levier (49a, 49b, 49c, 49d, 49e, 49f, 49g, 49h, 49i, 49j), un levier pouvant être placé manuellement, à partir d'une centrale inactive (39a), le long d'une première direction (31) dans une première position de commutation (39b) ou le long d'une deuxième position (32) opposée à la première position dans une deuxième position de commutation (39c), le levier étant précontraint dans sa position central, **caractérisé en ce que** le levier (49) coopère directement ou indirectement avec un aimant (71) qui exerce sur un levier se trouvant dans une position proche de la position centrale des forces importantes poussant le levier vers sa position centrale, au moins un élément de ressort (73, 74) séparé de l'aimant poussant également le levier vers sa position centrale (39a).

2. Combiné selon la revendication 1, **caractérisé en ce que** le levier comporte un élément de réglage pivotant (59, 59a, 59b, 59c, 59d, 59e, 59f, 59g, 59h, 59i, 59j) permettant de modifier un paramètre ou que le levier recouvre un tel élément de réglage.

3. Combiné selon la revendication 1 ou 2, comprenant un boîtier (12) en particulier parallélépipédique avec une face avant de boîtier (13) et une face arrière de boîtier (14), dans lequel une multitude d'éléments de commande programmables (15a, 15b, 15c, 15d) et, le cas échéant, plusieurs écrans (16a, 16b, 16c, 16d) sont disposés sur la face avant de boîtier (13), lesquels éléments de commande comprennent une multitude de touches de sélection (17a, 17b, 17c, 17d), lequel combiné établit, à la suite d'une activation d'une touche de sélection par un opérateur, une liaison acoustique et/ou vocale directe avec un autre combiné (18a, 18b) du réseau d'interphones par le biais d'un poste de commutation (19), une multitude de connexions (20a, 20b, 20c, 20d, 20e, 20f, 20g, 20h) telles qu'une connexion d'alimentation électrique, une connexion de câble de données ou une connexion BNC étant disposées sur la face arrière de boîtier (14), au moins un haut-parleur (24) ou une connexion (46) pour un haut-parleur étant fixé sur la face avant de boîtier (13), et au moins un microphone (44) et/ou au moins une connexion (45) pour un haut-parleur étant disposés sur la face avant de boîtier, la touche de sélection étant configurée en forme de levier (49).

4. Combiné selon une des revendications précédentes, **caractérisé en ce que** le levier peut être déplacé, en particulier incliné, le long d'une trajectoire rectiligne.

5. Combiné selon une des revendications précédentes, **caractérisé en ce qu'**au moins une connexion (46) pour un casque est disposée sur une face avant de boîtier (13).
